(19)

Europäisches
Patentamt
European
Patent Office
Office européen
des brevets

(11) **EP 4 239 412 A1**

(12) **EUROPEAN PATENT APPLICATION**

(43) Date of publication:
06.09.2023   Bulletin 2023/36

(21) Application number: 23158894.8

(22) Date of filing: 27.02.2023

(51) International Patent Classification (IPC):
*G03G 9/097* *(2006.01)*

(52) Cooperative Patent Classification (CPC):
G03G 9/09725; G03G 9/09708; G03G 9/09716;
G03G 9/09733

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   03.03.2022   JP 2022032922

(71) Applicant: **Ricoh Company, Ltd.**
**Tokyo 143-8555 (JP)**

(72) Inventors:
• **TAKAHASHI, Tsukiko**
  **Tokyo, 143-8555 (JP)**
• **HIROSE, Mitsuaki**
  **Tokyo, 143-8555 (JP)**
• **KITAGAWA, Yohichi**
  **Tokyo, 143-8555 (JP)**
• **KARATO, Suzuka**
  **Tokyo, 143-8555 (JP)**
• **YAMADA, Hiroshi**
  **Tokyo, 143-8555 (JP)**

(74) Representative: **Marks & Clerk LLP**
**15 Fetter Lane**
**London EC4A 1BW (GB)**

(54) **TONER, DEVELOPER, TONER HOUSING UNIT, IMAGE FORMING APPARATUS, AND METHOD OF FORMING IMAGE**

(57)    An object of the present invention is to provide a toner that has both low-temperature fixability and heat-resistant storage stability, suppresses contamination of cleaning parts and photoconductors, and has excellent charging stability.

A toner includes toner based particles containing a binder resin, a colorant, and a wax; and fine resin particles and an inorganic external additive that are present on a surface of the toner based particles, wherein a coverage of the fine resin particles is in a range from 30% to 70%, and wherein the inorganic external additive covers a surface of oxide of a metal element with hydroxide of a metal element.

EP 4 239 412 A1

**Description**

BACKGROUND OF THE INVENTION

1. Field of the Invention

The present invention relates to a toner, a developer, a toner housing unit, an image forming apparatus, and a method of forming image.

2. Description of the Related Art

Toners are required to have low-temperature fixability to save energy by reducing power consumption during fixing, and heat resistance to increase resistance to high temperatures and high humidity during storage and transportation after production. In order to improve the low-temperature fixability of toners, it is necessary to use materials with a low melting point in toners, but the heat resistance of toners manufactured using materials with a low melting point becomes worse, resulting in being incompatible to establish low-temperature fixability and heat resistance.

Therefore, as a method to establish both the low-temperature fixability and the heat-resistant storage stability, for example, Patent Document 1 proposes the use of composite resin particles produced by covering a part of the surface of the resin particles with one or two kinds of resin as a component (e.g., Patent Documents 1 to 4.).

(Related art documents)

Patent Documents

Patent Document 1: Japanese Patent Laid-Open No. 2002-284881
Patent Document 2: Japanese Patent Laid-Open No. 2019-099809
Patent Document 3: Japanese Patent Laid-Open No. 2019-143128
Patent Document 4: Japanese Patent Laid-Open No. 2007-233030

On the other hand, in recent years, there has been an increasing demand for longer service life and maintenance-free copying machines, and there is a need to control toner stains in a copying machine. Toner scattering is one of the causes of toner stains in the copying machine, and because the chargeability of the toner over time is not stable and the charge amount decreases, the toner is not sufficiently retained in the carrier and the copying machine gets contaminated by the toner scattering in the developing device. Although there is a tendency to increase these external additives in response to the demand for higher toner scattering suppression, the external additives cause toner fixability to be inhibited, which poses a challenge to achieve higher low-temperature fixability.

SUMMARY OF THE INVENTION

[Problems to be solved by invention]

However, in the conventional technique, a technique that can simultaneously establish both low-temperature fixability and heat-resistant storage stability, and can satisfy a suppression of contamination of cleaning parts and photoconductors and excellent charging stability such that toner scattering is reduced, has been desired.

An object of the present invention is to provide a toner that has both low-temperature fixability and heat-resistant storage stability, suppresses contamination of cleaning parts and photoconductors, and has excellent charging stability.

[Means to solve problems]

One aspect of the toner according to the present invention is a toner in which fine resin particles and an inorganic external additive are present on a surface of toner based particles containing a binder resin, a colorant, and wax, wherein a coverage of the fine resin particles is in a range from 30% to 70%, and wherein the inorganic external additive covers a surface of oxide of a metal element with hydroxide of a metal element.

[Effect of Invention]

One aspect of the present invention can provide a toner that has both low-temperature fixability and heat-resistant storage stability, suppresses contamination of cleaning parts and photoconductors, and has excellent charging stability.

BRIEF DESCRIPTION OF THE DRAWINGS

FIG. 1 is a schematic diagram illustrating an example of an image forming apparatus according to an embodiment;
FIG. 2 is a schematic diagram illustrating another example of an image forming apparatus according to an embodiment;
FIG. 3 is a schematic diagram illustrating an example of an image forming apparatus according to an embodiment;
FIG. 4 is a partially enlarged view of the image forming apparatus of FIG. 3; and
FIG. 5 is a schematic diagram illustrating an example of a process cartridge according to an embodiment.

DESCRIPTION OF THE PREFERRED EMBODIMENTS

Embodiments of the present invention will be described in detail below. Embodiments are not limited by the following descriptions, and may be appropriately changed to the extent that the changes do not deviate from the gist of the invention. In addition, "to" denoting a numerical range in the specification means, unless otherwise stated, that the numerical values listed before and after the number are included as lower and upper limits.

<Toner>

The toner according to one embodiment is described. The toner according to one embodiment is a toner including toner based particles containing a binder resin, a colorant, and a wax; and fine resin particles and an inorganic external additive that are present on a surface of the toner based particles. The coverage of the organic resin particles is in a range from 30% to 70%, and at least one of the inorganic external additives covers metal element hydroxides on metal element oxide surfaces.

In the present embodiment, toner based in which a plurality of organic resin particles is present on the surface of the toner based particles. The coverage between the adjacent organic fine resin particles present on the surface of the toner based particles is in a range from 30% to 70%. When the coverage is in this range, the toner can be hardened by covering the toner surface with organic fine resin particles that do not sufficiently inhibit the fixing, and the reliability (storage stability, adhesiveness) can be ensured, thereby achieving a high level of low-temperature fixability and heat-resistant storage stability.

In the present embodiment, at least one of the inorganic external additives covers metal element hydroxides on metal element oxide surfaces. Toners with excellent charging stability can be provided because the base material of the inorganic external additive is an oxide of a metal element. Since the surface of the oxide of the metal element is coated with the hydroxide of the metal element, the charging rise of the toner is ensured and the scattering of the toner can be suppressed at a high level.

Furthermore, in the present embodiment, at least one of the inorganic external additives covers metal element hydroxides on metal element oxide surfaces in the toner based particles having a plurality of organic resin particles on the surface. Oxides of metal elements coated with hydroxides of metal elements are externally added to the surface of toner based particles having organic resin particles, it prevents inorganic external additives from being released from the toner due to intermolecular interactions between the organic resin particle surface and hydroxyl groups. Therefore, the presence of multiple organic resin particles on the surface of the toner based particles makes the toner harder and the external additive less likely to be buried. At the same time, t prevents inorganic external additive s from being released from the toner. This effect is exerted when the coverage of the organic resin particles on the surface of the toner based particles is in a range from 30% to 70%.

[Toner Based Particles]

The toner according to one embodiment has toner based particles as described above.
The toner based particles contain at least a binder resin and a colorant and, if necessary, other components.
The toner based particles are preferably obtained by dissolving or dispersing at least a binder resin and a colorant in an organic solvent, adding the resulting dissolved or dispersed material into an aqueous phase, and removing the organic solvent from the resulting dispersion liquid. More preferably, at least a binder resin precursor and a colorant are dissolved or dispersed in an organic solvent, and the resulting dissolved or dispersed material is added in an aqueous phase to crosslink or elongate the binder resin precursor and remove the organic solvent.

[Binder Resin]

Toner based particles contain a binder resin as a resin component.

The binder resin can be used as long as the binder resin is a binder resin for toners. Examples of binder resins include general binder resins such as polyester resin, silicone resin, styrene-acrylic resin, styrene resin, acrylic resin, epoxy resin, diene resin, phenol resin, terpene resin, coumarin resin, amideimide resin, butyral resin, urethane resin, ethylene/vinyl acetate resin and the like. One of these may be used alone, or two or more may be used in combination. Among these, polyester resin is preferably used as a binder resin, so toners exhibit excellent low-temperature fixability.

(Polyester Resin)

A polyester resin preferably contains a non-linear amorphous polyester resin (also called amorphous polyester resin A) and a crystalline polyester resin (also called crystalline polyester resin C). The non-linear amorphous polyester resin A or crystalline polyester resin C may be included as an insoluble component in tetrahydrofuran (THF).

((Amorphous Polyester Resin))

Amorphous polyester resins are obtained by using a polyvalent alcohol component and a polyvalent carboxylic acid component such as a polyvalent carboxylic acid, a polyvalent carboxylic anhydride, a polyvalent carboxylic ester, and the like.

In the present embodiment, an amorphous polyester resin is defined as one obtained by using a polyvalent alcohol component and a polyvalent carboxylic acid component such as a polyvalent carboxylic acid, a polyvalent carboxylic anhydride, a polyvalent carboxylic ester, and the like as described above. A modified polyester resin such as a prepolymer described later and a resin obtained by crosslinking and/or elongation reaction of the prepolymer does not belong to an amorphous polyester resin.

Examples of the polyvalent alcohol components include alkylene (having a carbon number of 2 to 3) oxide (average addition molar number of 1 to 10) adducts of bisphenol A such as polyoxypropylene (2.2)-2,2-bis(4-hydroxyphenyl) propane, polyoxyethylene (2.2)-2,2-bis(4-hydroxyphenyl) propane, and the like; ethylene glycol, propylene glycol, neopentyl glycol, glycerin, pentaerythritol, trimethylolpropane, hydrogenated bisphenol A, sorbitol, or their alkylene (carbon number of 2 to 3) oxide (average addition molar number of 1 to 10) adducts. These may be used alone or in combination of two or more.

Examples of the polyvalent carboxylic acid component include dicarboxylic acids such as adipic acid, phthalic acid, isophthalic acid, terephthalic acid, fumaric acid, maleic acid, and the like; succinic acids substituted with alkyl group having a carbon number of 1 to 20 or alkenyl group having a carbon number of 2 to 20 such as dodecenylsuccinic acid, octylsuccinic acid, and the like; trimellitic acid, pyromellitic acid; anhydrides of those acids and alkyl (having a carbon number of 1 to 8) esters of those acids and the like. These may be used alone or in combination of two or more.

The amorphous polyester resin and the prepolymer described below and/or the resin obtained by cross-linking and/or elongation reaction of the prepolymer are preferably at least partially compatible. If these are compatible, low-temperature fixability and high-temperature offset resistance are improved. Therefore, the polyvalent alcohol and polyvalent carboxylic acid components constituting the amorphous polyester resin and the polyvalent alcohol and polyvalent carboxylic acid components constituting the prepolymer described later are preferably similar compositions.

The molecular weight of the amorphous polyester resin is not particularly limited and can be selected as appropriate according to the purpose. If the molecular weight is too low, the heat-resistant storage stability of the toner and the durability against stress such as agitation in the developing device may become inferior. If the molecular weight is too high, the viscoelasticity of the toner during melting may become high, resulting in poor low-temperature fixability. In the GPC measurement, the weight-average molecular weight (Mw) is preferably 2,500 to 10,000, the number-average molecular weight (Mn) is preferably 1,000 to 4,000, and the ratio of the weight-average molecular weight (Mw) to the number-average molecular weight (Mn) (Mw/Mn) is preferably 1.0 to 4.0.

The acid value of the amorphous polyester resin is not particularly limited and can be selected according to an intended purpose. The acid value of the amorphous polyester resin is preferably 1 mgKOH/g to 50 mgKOH/g and more preferably 5 mgKOH/g to 30 mgKOH/g. If the acid value is 1 mgKOH/g or more, the toner tends to become negatively charged, and furthermore, when the toner is fixed to a paper, the affinity between the paper and the toner becomes favorable to improve the low-temperature fixability. If the acid value is 50 mgKOH/g or less, the charging stability, especially against environmental fluctuations, does not decrease.

The hydroxyl value of the amorphous polyester resin is not particularly limited and can be selected as appropriate according to the purpose. The hydroxyl value is preferably 5 mgKOH/g or more.

The glass transition temperature (Tg) of the amorphous polyester resin is not particularly limited and can be appropriately selected according to the purpose. If the Tg is too low, the heat-resistant storage stability of the toner and the durability against stress such as agitation in the developing device may become inferior. If Tg is too high, the viscoelasticity of the toner during melting may become high, resulting in poor low-temperature fixability. Therefore, the glass transition temperature Tg of the amorphous polyester resin is preferably 40 to 70 °C and more preferably 45 to 60°C.

The content of the amorphous polyester resin is not particularly limited and can be selected appropriately according to the purpose. The content of the amorphous polyester resin is preferably 50 to 95 parts by mass and more preferably 60 to 90 parts by mass with respect to 100 parts by mass of toner. If the content of the amorphous polyester resin is less than 50 parts by mass, the dispersibility of the pigment and the releasing agent in the toner deteriorates, and image blurring and distortion may easily occur. If the content of the amorphous polyester resin exceeds 95 parts by mass, the low-temperature fixability may be inferior because the content of the crystalline polyester decreases. If the content of the amorphous polyester resin is in the above more preferable range, it is advantageous in that high image quality, high stability, and low-temperature fixability are all excellent.

The molecular structure of amorphous polyester resins can be confirmed by NMR measurements in solutions and solids, as well as X-ray diffraction, GC/MS, LC/MS, IR measurements, and the like. In a simple measurement, a method of detecting an amorphous polyester resin that does not absorb at $965\pm10$ cm$^{-1}$ and $990\pm10$ cm$^{-1}$ based on the $\delta$CH (out-of-plane deflection vibration) of olefins in the infrared absorption spectrum can be used.

((Crystalline Polyester Resin))

Crystalline polyester resins contain constituting components derived from saturated

As the saturated aliphatic diol, an alcohol component containing linear aliphatic diol having a carbon number of 2 to 8 is preferably used. This allows the crystalline polyester resin to be uniformly and finely dispersed inside the toner, thereby preventing the crystalline polyester resin from filming, improving stress resistance, and achieving low-temperature fixability of the toner.

The crystalline polyester resin exhibits heat-melt property that shows a sharp drop in viscosity near the starting temperature of fixing due to its high crystallinity. By using the crystalline polyester resin having the above property for a toner, the toner with excellent heat resistance and low-temperature fixability can be obtained because the heat-resistant storage stability is excellent due to the crystallinity just before the melting start temperature, and a sharp drop in viscosity (sharp melt property) is generated at the start melting temperature to fix the toner. The release width (the difference between the lower fixing temperature and the hot offset generation temperature) also shows excellent results.

The crystalline polyester resin is obtained by using a polyvalent alcohol component and a polyvalent carboxylic acid component such as a polyvalent carboxylic acid, a polyvalent carboxylic anhydride, a polyvalent carboxylic ester, and the like.

In the present embodiment, the crystalline polyester resin is defined as one obtained by using a polyvalent alcohol component and a polyvalent carboxylic acid component such as a polyvalent carboxylic acid, a polyvalent carboxylic anhydride, a polyvalent carboxylic ester, and the like as described above. A modified crystalline polyester resin such as a prepolymer described later and a resin obtained by crosslinking and/or elongation reaction of the prepolymer does not belong to the crystalline polyester resin.

-Polyvalent alcohol Components-

The polyvalent alcohol component is not particularly limited and can be selected as appropriate according to the purpose, for example, diols and trivalent or higher alcohols.

Examples of the diols include saturated aliphatic diols. The saturated aliphatic diols include linear saturated aliphatic diols and branched saturated aliphatic diols. Among these, linear saturated aliphatic diols are preferably used, and linear saturated aliphatic diols having a carbon number of 2 to 8 are more preferably used. If the saturated aliphatic diols are branched, the crystallinity of crystalline polyester resins decreases and the melting point may decrease. In addition, if the carbon number of the main chain portion is 2 or more, the increase in melting temperature is suppressed when condensed and polymerized with aromatic dicarboxylic acid, and low-temperature fixing can be achieved. If a carbon number of 8 or less, practically available materials can be obtained.

Examples of the saturated aliphatic diols include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, 1,14-eicosandecanediol, and the like. Among these, ethylene glycol, 1,3-propanediol, 1,4-butanediol, 1,5-pentanediol, and 1,6-hexanediol are preferably used because of the high crystallinity and excellent sharp-melt properties of the crystal polyester resin.

Examples of the trivalent or higher alcohols include glycerin, trimethylolethane, trimethylolpropane, pentaerythritol, and the like. These may be used alone or in combination of two or more.

-Polyvalent Carboxylic Acid Components-

As the polyvalent carboxylic acid components, sebacic acid is used, but other bivalent carboxylic acids and trivalent or higher carboxylic acids can be used in combination depending on the purpose.

Examples of the divalent carboxylic acids include saturated aliphatic dicarboxylic acids such as oxalic acid, succinic acid, glutaric acid, adipic acid, speric acid, azelaic acid, sebacic acid, 1,9-nonanedicarboxylic acid, 1,10-decanedicarboxylic acid, 1,12-dodecanedicarboxylic acid, 1,14-tetradecanedicarboxylic acid, 1,18-octadecanedicarboxylic acid, and the like; aromatic dicarboxylic acids of dibasic acids such as phthalic acid, isophthalic acid, terephthalic acid, naphthalene-2,6-dicarboxylic acid, malonic acid, mesaconic acid; and the like. These anhydrides and these lower alkyl esters can also be used.

Examples of the trivalent or higher carboxylic acids include 1,2,4-benzenetricarboxylic acid, 1,2,5-benzenetricarboxylic acid, 1,2,4-naphthalenetricarboxylic acid. These anhydrides, these lower alkyl esters, and the like also can be used.

As the polyvalent carboxylic acid component, a dicarboxylic acid component having a sulfonic acid group in addition to the saturated aliphatic dicarboxylic acid and aromatic dicarboxylic acid may be used. Furthermore, in addition to the saturated aliphatic dicarboxylic acid or aromatic dicarboxylic acid, dicarboxylic acid components having double bonds may be used.

These may be used alone or in combination of two or more.

The melting point of the crystalline polyester resin is not particularly limited and can be selected as appropriate according to the purpose. The melting point of the crystalline polyester resin is preferably 60°C or higher and less than 80°C. If the melting point of the crystalline polyester resin is 60°C or higher, the melting of the crystalline polyester resin at low-temperatures is suppressed, and the heat-resistant storage stability of the toner can be maintained. If the melting point of the crystalline polyester resin is less than 80°C, the melting of the polyester resin A by heating during fixing is sufficient, and the lowering of the low-temperature fixability is suppressed.

The melting point can be measured by the endothermic peak value of the DSC chart in the differential scanning calorimeter (DSC) measurement.

The molecular weight of the crystalline polyester resin is not particularly limited and can be selected appropriately according to the purpose. The soluble component of ortho-dichlorobenzene of the crystalline polyester resin has a weight-average molecular weight (Mw) of 3,000 to 30,000, a number-average molecular weight (Mn) of 1,000 to 10,000, and Mw/Mn of 1.0 to 10 in GPC measurement, from the viewpoint that the crystalline polyester resin with a sharp molecular weight distribution and low molecular weight are excellent in low-temperature fixability and that heat-resistant storage stability deteriorates with many components with low molecular weight.

The acid value of the crystalline polyester resin is not particularly limited and can be selected appropriately according to the purpose. In order to achieve the desired low-temperature fixability from the viewpoint of the affinity between paper and resin, the acid value of the crystalline polyester resin is preferably 5 mgKOH/g or more and more preferably 10 mgKOH/g or more. In order to improve high temperature offset resistance, the acid value of the crystalline polyester resin is preferably 45 mgKOH/g or less.

The hydroxyl value of the crystalline polyester resin is not particularly limited and can be selected appropriately according to the purpose. In order to achieve the desired thermal fixability and excellent charging property, the hydroxyl value of the crystalline polyester resin is preferably 0 mgKOH/g to 50 mgKOH/g and more preferably 5 mgKOH/g to 50 mgKOH/g.

The molecular structure of crystalline polyester resins can be confirmed by NMR measurements in solutions and solids, as well as X-ray diffraction, GC/MS, LC/MS, IR measurements, and the like. In a simple measurement, a method of detecting a crystalline polyester resin that does not absorb at $965\pm10$ cm$^{-1}$ and $990\pm10$ cm$^{-1}$ based on the $\delta$CH (out-of-plane deflection vibration) of olefins in the infrared absorption spectrum can be used.

The content of the crystalline polyester resin is not particularly limited and can be selected appropriately according to the purpose. The content of the crystalline polyester resin is preferably 2 to 20 parts by mass and more preferably 5 to 15 parts by mass with respect to 100 parts by mass of toner. If the content of the crystalline polyester resin is 2 parts by mass or more, the sharp melt by crystalline polyester resin is sufficient to provide sufficient low-temperature fixability. If the content of the crystalline polyester resin is 20 parts by mass or less, heat-resistant storage stability can be maintained and image blurring can be suppressed. If the content of the crystalline polyester resin is in the above more preferable range, it is advantageous in that high image quality, high stability, and low-temperature fixability are all excellent.

[Colorants]

The colorant is not particularly limited and can be selected as appropriate according to the purpose. Examples of the colorants may include, for example, carbon black, nigrosine dye, iron black, naphthol yellow S, hansa yellow (10G, 5G, G), cadmium yellow, yellow iron oxide, loess, chrome yellow, titan yellow, polyazo yellow oil yellow, hansa yellow (GR, A, RN, R), pigment yellow L, benzidine yellow (G, GR), permanent yellow (NCG), vulcan fast yellow (5G, R), tartrazine lake, quinoline yellow lake, anthracite yellow BGL, isoindolinone yellow, colcothar, red lead, vermilion, cadmium red, cadmium mercury red, antimony vermilion, permanent red 4R, paranitraniline red, fire red, para chloro ortho nitro aniline red, lithol fast scarlet G, brilliant fast scarlet, brilliant carmine BS, permanent red (F2R, F4R, FRL, FRLL, F4RH), fast scarlet VD, vulcan fast rubine B, brilliant scarlet G, lithol rubine GX, permanent red F5R, brilliant carmine 6B, pigment scarlet 3B, bordeaux 5B, toluidine maroon, permanent bordeaux F2K, helio bordeaux BL, bordeaux 10B, bon maroon light, bon maroon medium, eosine lake, rhodamine lake B, rhodamine lake Y, alizarin lake, thioindigo red B, thioindigo maroon, oil red, quinacridone red, pyrazolone red, polyazo red, chrome vermilion, benzidine orange, perinone orange, oil orange, cobalt blue, cerulean blue, alkaline blue lake, peacock blue lake, victoria blue lake, metal-free phthalocyanine blue, phthalocyanine blue, fast sky blue, indanthrene blue (RS, BC), indigo, ultramarine blue, prussian blue, anthraquinone blue, fast violet B, methyl-violet lake, cobalt violet, manganese violet, dioxane violet, anthraquinone violet, chrome green, zinc green, chrome oxide, viridian, emerald green, pigment green B, naphthol green B, green gold, acid green lake, malachite green lake, phthalocyanine green, anthraquinone green, titanium oxide, zinc white, and lithopone.

The content of the colorant is not particularly limited and can be selected as appropriate according to the purpose. The content of the colorant is preferably 1 to 15 parts by mass and more preferably 3 to 10 parts by mass with respect to 100 parts by mass of the toner.

The colorant can also be used as a masterbatch composited with resin. Examples of the resin kneaded and mixed in the manufacture of master batch or with master batch include polymerization of styrene or its substitutes such as polystyrene, polyp-chlorostyrene, polyvinyltoluene, and the like in addition to hybrid resins; styrene based copolymers such as styrene-p-Chlorostyrene copolymers, styrene-propylene copolymers, styrene-vinyl toluene copolymers, styrene-vinyl naphthalene copolymers, styrene-methyl acrylate copolymers, styrene-ethyl acrylate copolymers, styrene-butyl acrylate copolymers, styrene-octyl acrylate copolymers, styrene-methyl methacrylate copolymers, styrene-ethyl methacrylate copolymers, styrene-butyl methacrylate copolymers, styrene-alphamethyl chlormethacrylate copolymers, styrene-acrylonitrile copolymers, styrene-vinyl methyl ketone copolymers, styrene-butadiene copolymers, styreneisoprene copolymers, styrene-acrylonitrile indene copolymers, styrene-maleic acid copolymers, styrenemaleate copolymers, and the like; polymethyl methacrylate, polybutyl methacrylate, polyvinyl chloride, polyvinyl acetate, polyethylene, polypropylene, polyester, epoxy resin, epoxy polyol resin, polyurethane, polyamide, polyvinyl butyral, polyacrylic acid resin, rosin, modified rosin, terpene resin, aliphatic or alicyclic hydrocarbon resin, aromatic petroleum resin, chlorinated paraffin, paraffin wax, and the like. These may be used alone or in combination of two or more.

The master batch can be obtained by mixing the resin for the master batch with the colorant under high shear force and kneading. In this case, an organic solvent can be used to enhance the interaction between the colorant and the resin. The so-called flushing method, in which an aqueous paste containing water of a colorant is mixed and kneaded with a resin and an organic solvent to transfer the colorant to the resin side and remove the water content and the organic solvent components, is also preferably used because the wet cake of the colorant can be used as is without the need to dry. For mixing and kneading, a high shear disperser such as a three-roll mill is preferably used.

[Fine Resin Particles]

The fine resin particles are arranged on the surface of the toner based particles so as to cover the surface of the toner based particles. The coverage of the fine resin particles is preferably 30% to 70%. If the coverage is 30% or more, the heat-resistant storage stability of the toner can be ensured. If the coverage is 70% or less, the external additive is easy to adhere to the toner based particles, heat is easily transmitted to the toner based particles during toner fixing, and fixability can be ensured.

(Measurement of Distance Between Fine Resin Particles)

In the following, the ultrasonic treatment is used to free the external additives as much as possible to make the particles closer to the toner based particles, and the mean and standard deviation of the distance between the fine resin particles are determined.

-How to Release External Additives-

[1] 50 ml of a 5% aqueous solution (Product name: Neugen ET-165, manufactured by Daiichi Kogyo Pharmaceutical Co., Ltd.) containing a surfactant is added to a 100 ml screw tube, then 3 g of toner is added to the mixture. Thereafter, the mixture is gently moved up, down, left, and right. The mixture is then stirred in a ball mill for 30 minutes so that the toner blends into the dispersion liquid.

[2] Then, using an ultrasonic homogenizer (Product name: homogenizer, format: VCX750, CV33, manufactured by SONICS & MATERIALS Limited), the power is set to 40 W and ultrasonic energy is applied to the mixture for 60 minutes.

- Ultrasonic conditions -

·Vibration time: 60 minutes continuous

·Amplitude: 40 W

·Vibration start temperature: 23±1.5°C

·Temperature during vibration: 23±1.5°C

[3]

(1) The dispersion liquid is suction-filtered with a filter paper (Product name: Qualitative filter paper (No. 2, 110 mm), manufactured by Advantech Toyo Co., Ltd.), washed twice again with ion-exchange water and filtered, the freed additive is removed, and the toner particles are dried.

(2) The toner obtained in (1) is observed under a scanning electron microscope (SEM). First, by observing reflected electron images, external additives and fillers containing Si are detected.

(3) The image in (1) is binarized by image processing software (ImageJ) to eliminate the external additives and fillers.

The secondary electron image is then observed at the same position as in (1). Since the fine resin particles are not observed in the reflected electron image but only in the secondary electron image, the image processing software is used to measure the distance between the fine resin particles (the distance between a center of a particle and a center of another particle) by comparing with the image obtained in (3) and using the fine particles present in the area other than the residual additive and the filler (the area other than the area excluded in (3)) as the fine resin particles.

This measurement is performed on 100 binarized images (1 toner particle per image), and the average is the average of the distances between the fine resin particles.

The standard deviation of the distance between the fine resin particles is calculated by the following formula (1), where the distance between the particles is x.

[Formula 1]

$$\sqrt{\frac{1}{n-1}\sum_{k=1}^{n}} \quad (x_i - \bar{x}) \qquad \cdots (1)$$

[Shooting Conditions]

·Scanning electron microscope: SU-8230 (manufactured by Hitachi High Technologies)

·Shooting magnification: 35,000 times

·Image: SE (L): secondary electron, BSE (reflected electron)

·Acceleration voltage: 2.0 kV

·Acceleration current: 1.0 μA

·Probe current: Normal

·Focus Mode: UHR

·WD: 8.0 mm

The volume-average primary particle size of the fine resin particles is preferably 5 nm to 100 nm, and more preferably 10 nm to 50 nm. When the volume-average primary particle size is 5 nm to 100 nm, the low-temperature fixability is favorable. The volume-average primary particle size can be measured, for example, by scanning electron microscope (SEM) image observation.

The fine resin particles (hereafter also referred to as "fine resin particles (B)") preferably have a core resin (core part) and a shell resin (outer shell part) covering at least a part of the surface of the core resin, more preferably consist of a core resin and a shell resin, and more preferably contain a vinyl-based unit consisting of resin (b1) and resin (b2).

The shell resin (hereinafter also referred to as resin (b1)) and the core resin (hereafter also referred to as resin (b2)) are preferably polymers of homopolymerized or copolymerized vinyl monomers.

Examples of the vinyl monomers include the following (1) to (10).

(1) Vinyl Hydrocarbons

Examples of vinyl hydrocarbons include (1-1) aliphatic vinyl hydrocarbons, (1-2) alicyclic vinyl hydrocarbons, (1-3) aromatic vinyl hydrocarbons, and the like.

(1-1) Aliphatic Vinyl Hydrocarbons

Examples of aliphatic vinyl hydrocarbons include alkenes, alkadienes, and the like.

Examples of alkenes include ethylene, propylene, α-olefin, and the like.

Examples of alkadienes include butadiene, isoprene, 1,4-pentadiene, 1,6-hexadiene, 1,7-octadiene, and the like.

(1-2) Alicyclic Vinyl Hydrocarbons

Examples of alicyclic vinyl hydrocarbons include mono-cycloalkene, di-cycloalkene, and alkadiene, and specific examples include (di)cyclopentadiene, terpenes, and the like.

(1-3) Aromatic Vinyl Hydrocarbons

Examples of aromatic vinyl hydrocarbons include styrene or its hydrocarbyl (alkyl, cycloalkyl, aralkyl and/or alkenyl) substitutes, and the like, and specific examples include α-methylstyrene, 2,4-dimethylstyrene, vinylnaphthalene, and the like.

(2) Carboxyl Group-Containing Vinyl Monomer and its Salt

Examples of the carboxyl group-containing vinyl monomer and its salt include unsaturated monocarboxylic acid(salt) having a carbon number of 3 to 30, an unsaturated dicarboxylic acid(salt) and its anhydride(salt), its monoalkyl (having a carbon number of 1 to 24) ester or its salt, and the like.

Specifically, examples include carboxyl group-containing vinyl monomers and their metal salts such as (meth)acrylic acid, (anhydrous)maleic acid, maleic acid monoalkyl ester, fumaric acid, fumaric acid monoalkyl ester, crotonic acid, itaconic acid, itaconic acid monoalkyl ester, itaconic acid glycol monoether, citraconic acid, citraconic acid monoalkyl ester, cinnamic acid, and the like.

In the present embodiment, "(salt)" means an acid or its salt. For example, unsaturated monocarboxylic acid(salt) having a carbon number of 3 to 30 refers to an unsaturated monocarboxylic acid or its salt. In the present embodiment, "(meth)acrylic acid" means methacrylic acid or acrylic acid. In the present embodiment, "(meth)acryloyl" means methacryloyl or acryloyl. In the present embodiment, "(meth)acrylate" means methacrylate or acrylate.

(3) Sulfonic Acid Group-Containing vinyl Monomers, Vinyl Sulfate Monoesters and Their Salts

Examples of sulfonic acid group-containing vinyl monomers, vinyl sulfate monoesters and their salts include alkene sulfonic acid(salt) having a carbon number of 2 to 14, alkyl sulfonic acid (salt) having a carbon number of 2 to 24, sulfo(hydroxy)alkyl-(meth)acrylate(salt), or (meth)acrylamide(salt), alkylarylsulfosuccinic acid(salt), and the like.

More specifically, alkene sulfonic acids having a carbon number of 2 to 14 is vinylsulfonic acid(salt), alkylsulfonic acids having a carbon number of 2 to 24 is $\alpha$-methylstyrene sulfonic acid(salt), and sulfo(hydroxy) alkyl-(meth)acrylate(salt) or (meth)acrylamide(salt) is sulfopropyl (meth)acrylate(salt), sulfate(salt), sulfonic acid group-containing vinyl monomer(salt), or the like.

(4) Phosphate Group-Containing Vinyl Monomer and its Salt

Examples of phosphate group-containing vinyl monomers and their salts include (meth)acryloyloxyalkyl (having a carbon number of 1 to 24) phosphate monoester(salt), (meth)acryloyloxyalkyl (having a carbon number of 1 to 24) phosphonic acid(salt), and the like.

Specific examples of (meth)acryloyloxyalkyl (having a carbon number of 1 to 24) phosphate monoesters(salts) is 2-hydroxyethyl (meth)acryloyl phosphate(salts), phenyl-2-acryloyloxyethyl phosphate(salts), and the like.

Specific examples of (meth)acryloyloxyalkyl (having a carbon number of 1 to 24) phosphonic acid(salt) is 2-acryloyloxyethyl phosphonic acid(salt) and the like.

Examples of the salts in (2) to (4) above include alkali metal salts (sodium salts, potassium salts, and the like), alkaline earth metal salts (calcium salt, magnesium salt, and the like), ammonium salts, amine salts, quaternary ammonium salts, and the like.

(5) Hydroxyl Group-Containing Vinyl Monomers

Examples of hydroxyl group-containing vinyl monomers include hydroxystyrene, N-methylol (meth)acrylamide, hydroxyethyl (meth)acrylate, hydroxypropyl (meth)acrylate, polyethylene glycol mono (meth)acrylate, (meth)allyl alcohol, crotyl alcohol, isocrotyl alcohol, 1-butene-3-ol, 2-butene-1-ol, 2-butene-1,4-diol, propargyl alcohol, 2-hydroxyethyl propenyl ether, sucrose allyl ether, and the like.

(6) Nitrogen-Containing Vinyl Monomers

Examples of nitrogen-containing vinyl monomers include (6-1) amino group-containing vinyl monomers, (6-2) amide group-containing vinyl monomers, (6-3) nitrile group-containing vinyl monomers, (6-4) quaternary ammonium cationic group-containing vinyl monomers, (6-5) nitro group-containing vinyl monomers, and the like.

(6-1) Examples of the amino group-containing vinyl monomers include aminoethyl (meth)acrylate and the like.

(6-2) Examples of the amide group-containing vinyl monomers include (meth)acrylamide, N-methyl (meth)acrylamide, and the like.

(6-3) Examples of the nitrile group-containing vinyl monomers include (meth) acrylonitrile, cyanostyrene, cyanoacrylate, and the like.

(6-4) Examples of quaternary ammonium cationic group-containing vinyl monomers include quaternary compounds (quaternized with quaternizing agents such as methyl chloride, dimethyl sulfate, benzyl chloride, dimethyl carbonate, and the like) of tertiary amine group-containing vinyl monomers such as dimethylaminoethyl (meth)acrylate, diethylaminoethyl (meth)acrylate, dimethylaminoethyl (meth)acrylamide, diethylaminoethyl (meth)acrylamide, diallylamine, and the like.

(6-5) Nitro group-containing vinyl monomers include, for example, nitrostyrene and the like.

(7) Epoxy Group-Containing Vinyl Monomer

Examples of the epoxy group-containing vinyl monomer include glycidyl (meth)acrylate, tetrahydrofurfuryl (meth)acrylate, p-vinylphenylphenyloxide, and the like.

(8) Halogen-Containing Vinyl Monomer

Examples of halogen-containing vinyl monomers include vinyl chloride, vinyl bromide, vinylidene chloride, allyl chloride, chlorstyrene, bromostyrene, dichlorostyrene, chloromethylstyrene, tetrafluorostyrene, chloroprene, and the like.

(9) Vinyl Esters, Vinyl(thio)ethers, Vinyl Ketones

Examples of vinyl esters include vinyl acetate, vinyl butyrate, vinyl propionate, vinyl butyrate, diallyl phthalate, diallyl adipate, isopropenyl acetate, vinyl methacrylate, methyl 4-vinyl benzoate, cyclohexyl methacrylate, benzyl methacrylate, phenyl(meth)acrylate, vinyl methoxy acetate, vinyl benzoate, ethyl $\alpha$-ethoxyacrylate, alkyl (meth)acrylate with 1 to 50 carbon alkyl group [methyl (meth)acrylate, ethyl (meth)acrylate, propyl (meth)acrylate, butyl (meth)acrylate, 2-ethylhexyl (meth)acrylate, dodecyl (meth)acrylate, hexadecyl (meth)acrylate, heptadecyl (meth)acrylate, octadecyl (meth)acrylate, eicosyl (meth)acrylate, behenyl (meth)acrylate, and the like], dialkyl fumarate (2 alkyl groups are 2 to 8 carbon linear, branched, or alicyclic groups), dialkyl malate (2 alkyl groups are 2 to 8 carbon linear, branched, or alicyclic groups), poly (meth)allyloxyalkane [diallyloxyethane, triallyloxyethane, tetraallyloxyethane, tetraallyloxypropane, tetraallyloxybutane, tetrametaallyloxyethane, and the like], vinyl monomer with polyalkylene glycol chain [polyethylene glycol (molecular weight 300) mono (meth)acrylate, polypropylene glycol (molecular weight 500) monoacrylate, methyl alcohol ethylene oxide 10 mol adduct (meth)acrylate, lauryl alcohol ethylene oxide 30 mol adduct (meth)acrylate, and the like], poly(meth)acrylate [poly(meth)acrylates of polyvalent alcohol: ethylene glycol di(meth)acrylate, propylene glycol di(meth)acrylate, neopentyl glycol di(meth)acrylate, trimethylolpropane tri(meth)acrylate, polyethylene glycol di(meth)acrylate, and the like], and the like.

Examples of the vinyl(thio)ethers include vinyl methyl ether and the like.

Examples of the vinyl ketones include vinyl methyl ketone and the like.

(10) Other Vinyl Monomers

Examples of other vinyl monomers include tetrafluoroethylene, fluoroacrylate, isocyanatoethyl (meth)acrylate, m-isopropenyl-$\alpha,\alpha$-dimethylbenzyl isocyanate, and the like.

For the synthesis of resin (b1), one of the vinyl monomers (1) to (10) above may be used alone, or two or more vinyl monomers may be used in combination.

Styrene-acrylic resin is preferably used as the resin (b1) from the viewpoint of low-temperature fixability. Specifically, styrene-(meth)acrylic ester copolymers and (meth)acrylic ester copolymers are preferably used as styrene-acrylic resins, and styrene-(meth)acrylic ester copolymers are more preferably used.

The resin (b1) with carboxylic acid imparts an acid value to the resin, and the fine resin particles (B) easily form toner particles adhering to the surface of the toner particles.

The vinyl monomer used for the resin (b2) is similar to the resin (b1).

For the synthesis of the resin (b2), one of the vinyl monomers (1) to (10) listed in the above resin (b1) may be used alone, or two or more vinyl monomers may be used in combination.

Styrene-acrylic resin is preferably used as the resin (b2) from the viewpoint of low-temperature fixability. Specific examples of styrene-acrylic resin are preferably styrene-(meth)acrylic ester copolymers and (meth)acrylic ester copolymers, and more preferably styrene-(meth)acrylic ester copolymers.

The loss modulus G'' of viscoelastic property of resin (b1) at 100°C at a frequency of 1 Hz is preferably in a range from 1.5 MPa to 100 MPa, more preferably in a range from 1.7 MPa to 30 MPa, and even more preferably in a range from 2.0 MPa to 10 MPa.

The loss modulus G'' of viscoelastic property of resin (b2) at 100°C at a frequency of 1 Hz is preferably from 0.01 MPa to 1.0 MPa, more preferably from 0.02 MPa to 0.5 MPa, and even more preferably from 0.05 MPa to 0.3 MPa.

When the loss modulus G'' of the viscoelastic property is in the above range, the fine resin particles (B) containing the resin (b1) and the resin (b2) as components in the same particles easily form toner particles adhering to the surface of the toner particles.

The loss modulus G'' of the viscoelastic property of the resin (b1) and the resin (b2) at 100°C at a frequency of 1 Hz can be adjusted by changing the types of constituent monomers and their composition ratios or by changing the polymerization conditions (type and amount of initiator, chain transfer agent, reaction temperature, and the like).

Specifically, each G'' can be adjusted to the aforementioned range by making the composition as follows. (1) With respect to the glass transition temperature (Tg1) calculated from the constituent monomers of the resin (b1) and the glass transition temperature (Tg2) calculated from the constituent monomers of the resin (b2), Tg1 is preferably in a range from 0°C to 150°C, more preferably in a range from 50°C to 100°C, and Tg2 is preferably in a range from -30°C to 100°C, more preferably in a range from 0°C to 80°C, and most preferably in a range from 30°C to 60°C.

The glass transition temperature (Tg) calculated from the constituent monomers is a value that can be calculated by the Fox method.

Here, the Fox method [T.G. Fox, Phys.Rev., 86,652 (1952)] is a method for estimating the Tg of a copolymer from the Tg of each homopolymer represented by the following formula:

$$1/Tg = W1/Tg1 + W2/Tg2 + ... + Wn/Tgn$$

[In the formula, Tg is the glass transition temperature of the copolymer (expressed as absolute temperature), Tg1, Tg2, ..., Tgn is the glass transition temperature of the homopolymer of each monomer component (expressed as absolute temperature), and W1, W2, ..., Wn is the weight fraction of each monomer component.]

(2) For the calculated acid value (AV1) of the resin (b1) and the calculated acid value (AV2) of the resin (b2), (AV1) is preferably 75 mgKOH/g to 400 mgKOH/g, more preferably 150 mgKOH/g to 300 mgKOH/g, and (AV2) is 0 mgKOH/g to 50 mgKOH/g, more preferably 0 mgKOH/g to 20 mgKOH/g, most preferably 0 mgKOH/g.

The calculated acid value is the theoretical acid value calculated from the moles of acidic groups contained in the constituent monomers and the total weight of the constituent monomers.

(1) As the constituent monomers satisfying the conditions of (1) and (2), as for the resin (b1), styrene as a constituent monomer is preferably contained, for example, in a range from 10% by mass to 80% by mass and more preferably contained in a range from 30% by mass to 60% by mass based on the total mass of resin (b1), methacrylic acid and/or acrylic acid is preferably contained in a range from 10% by mass to 60% by mass in total and more preferably contained in a range from 30% by mass to 50% by mass in total based on the total mass of resin (b1).

As for the resin (b2), for example, styrene as a constituent monomer is preferably contained in a range from 10% by mass to 100% by mass and more preferably contained in a range from 30% by mass to 90% by mass based on the total mass of the resin (b2), and methacrylic acid and/or acrylic acid is preferably contained in a range from 0% by mass to 7.5% by mass and more preferably contained in a range from 0% by mass to 2.5% by mass based on the total mass of the resin (b2).

(3) The polymerization conditions (type and amount of initiator, chain transfer agent, and reaction temperature, and the like) are adjusted. Specifically, for the number-average molecular weights (Mn1) and (Mn2) of the resins (b1) and (b2), (Mn1) is preferably in a range from 2,000 to 2,000,000 and more preferably 20,000 to 200,000. (Mn2) is preferably in a range from 1,000 to 1,000,000 and more preferably 10,000 to 100,000.

In the present embodiment, the loss modulus G'' of the viscoelastic property is measured using, for example, the viscoelastic measuring device described below.

·Equipment: ARES-24 A (Rheometric)

·Jig: 25 mm parallel plate

·Frequency: 1 Hz

·Strain rate: 10%

·Heating rate: 5°C/min

The acid value (AVb1) of resin (b1) is preferably in a range from 75 mgKOH/g to 400 mgKOH/g and more preferably in a range from 150 mgKOH/g to 300 mgKOH/g. If the acid value is in the above range, fine resin particles (B) containing a vinyl-based unit containing resin (b1) and resin (b2) as components in the same particles easily form particles adhering to the surface of the toner.

The resin (b1) having an acid value in the above range is a resin in which methacrylic acid and/or acrylic acid is preferably contained in a range from 10% by mass to 60% by mass and more preferably in a range from 30% by mass to 50% by mass based on the total mass of the resin (b1).

The acid value (AVb2) of resin (b2) is preferably in a range from 0 mgKOH/g to 50 mgKOH/g, more preferably in a range from 0 mgKOH/g to 20 mgKOH/g, and even more preferably 0 mgKOH/g from the viewpoint of low-temperature fixability.

The acid value of resin (b2) in the above range is a resin in which methacrylic acid and/or acrylic acid is preferably in a range from 0% by mass to 7.5% by mass in total and more preferably in a range from 0% by mass to 2.5% by mass in total, based on the total mass of the resin (b2).

The acid value can be measured, for example, by the method of JIS K 0070: 1992.

The glass transition temperature of the resin (b1) is preferably higher than the glass transition temperature of the resin (b2), more preferably 10°C or higher than the glass transition temperature of the resin (b2), and more preferably 20°C or higher than the glass transition temperature of the resin (b2). When the glass transition temperature of the resin (b1) is higher than the glass transition temperature of the resin (b2), the balance between the ease of forming toner particles in which the fine resin particles (B) adhere to the surface of the toner and the low-temperature fixability of the toner in one embodiment becomes excellent.

The glass transition temperature (hereinafter, referred to as Tg) of the resin (b1) is preferably from 0 to 150°C, and more preferably from 50 to 100°C. If the glass transition temperature is 0°C or higher, the heat-resistant storage stability can be improved. If the glass transition temperature is 150°C or lower, the low-temperature fixability of the resulting toner does not get degraded very much.

The Tg of resin (b2) is preferably from -30 to 100°C, more preferably from 0 to 80°C, and even more preferably from 30 to 60°C. If the glass transition temperature is -30°C or higher, the heat-resistant storage stability can be improved. If the glass transition temperature is 100°C or lower, the low-temperature fixability of the resulting toner does not get degraded very much.

Tg is measured by the method specified in ASTM D 3418-82 (DSC) using "DSC20, SSC/580" (manufactured by Seiko Electronics Industries, Ltd.).

The solubility parameter (hereinafter, referred to as SP value) of resin (b1) is preferably 9 $(cal/cm^3)^{1/2}$ to 13 $(cal/cm^3)^{1/2}$, more preferably 9.5 $(cal/cm^3)^{1/2}$ to 12.5 $(cal/cm^3)^{1/2}$, and even more preferably 10.5 $(cal/cm^3)^{1/2}$ to 11.5 $(cal/cm^3)^{1/2}$ from the viewpoint of the ease of toner particle formation.

The SP value of resin (b1) can be adjusted by changing the type of monomer and its composition ratio.

The SP value of resin (b2) is preferably 8.5 $(cal/cm^3)^{1/2}$ to 12.5 $(cal/cm^3)^{1/2}$, more preferably 9 $(cal/cm^3)^{1/2}$ to 12 $(cal/cm^3)^{1/2}$, and even more preferably 10 $(cal/cm^3)^{1/2}$ to 11 $(cal/cm^3)^{1/2}$ from the viewpoint of the ease of toner particle formation.

The SP value of resin (b2) can be adjusted by changing the type of monomer and its composition ratio.

SP value is calculated using the method by Fedors [Polym. Eng. Sci. 14 (2) 152, (1974)].

From the viewpoint of the copolymerizability of resin (b1) with Tg and other monomers, in the resin (b1), styrene as a constituent monomer is preferably contained 10% by mass to 80% by mass and more preferably 30% by mass to 60% by mass, based on the total mass of resin (b1).

From the viewpoint of the copolymerizability of resin (b2) with Tg and other vinyl monomers, in the resin (b2), styrene as a constituent monomer is preferably contained 10% by mass to 100% by mass and more preferably 30% by mass to 90% by mass, based on the total mass of resin (b2).

The number-average molecular weight (Mn) of the resin (b1) is preferably 2,000 to 2,000,000 and more preferably 20,000 to 200,000. If the number-average molecular weight is 2,000 or more, the heat-resistance is improved. If number-average molecular weight is 2,000,000 or less, the low-temperature fixability of the resulting toner does not get degraded very much.

The weight-average molecular weight (Mw) of the resin (b1) is preferably larger than the weight-average molecular weight (Mw) of the resin (b2), more preferably at least 1.5 times larger than the weight-average molecular weight (Mw) of the resin (b2), and even more preferably at least 2.0 times larger than the weight-average molecular weight (Mw) of the resin (b2). Within this range, the toner is easily formed, and the low-temperature fixability is well balanced.

The weight-average molecular weight (Mw) of the resin (b1) is preferably 20,000 to 20,000,000 and more preferably 200,000 to 2,000,000. If the weight-average molecular weight (Mw) is 20,000 or more, the heat-resistance is improved. If the weight-average molecular weight (Mw) is 20,000,000 or less, the low-temperature fixability of the resulting toner does not get degraded very much.

The number-average molecular weight (Mn) of the resin (b2) is preferably 1,000 to 1,000,000 and more preferably 10,000 to 100,000. If number-average molecular weight (Mn) is 1,000 or more, the heat-resistant storage stability of the toner is improved. If the number-average molecular weight (Mn) is 1,000,000 or less, the low-temperature fixability of the resulting toner does not get degraded very much.

The weight-average molecular weight (Mw) of the resin (b2) is preferably 10,000 to 10,000,000 and more preferably 100,000 to 1,000,000. If the weight-average molecular weight (Mw) is 10,000 or more, the heat-resistant storage stability of the toner is improved. If the weight-average molecular weight (Mw) is 10,000,000 or less, the low-temperature fixability of the resulting toner does not get degraded very much.

Among these, it is preferable that the weight-average molecular weight (Mw) of resin (b1) is 200,000 to 2,000,000, and the weight-average molecular weight (Mw) of resin (b2) is 100,000 to 500,000, and the relationship of the Mw of (b1) and (b2) is "Mw of (b1) > Mw of (b2)".

The number-average molecular weight (Mn) and weight-average molecular weight (Mw) can be determined using gel permeation chromatography (GPC) under the following conditions.

·Equipment (example): "HLC-8120" (manufactured by Tosoh Corporation)

·Columns (one example): Two TSK GEL GMH6 (manufactured by Tosoh Corporation)

·Measuring temperature: 40°C

·Sample solution: 0.25 wt% tetrahydrofuran solution

(insoluble content is filtered through a glass filter)

·Solution injection volume: 100 ul

·Detector: Refractive index detector

·Reference Material: Standard polystyrene (TSK standard POLYSTYRENE) 12 items (Molecular weight: 500, 1,050, 2,800, 5,970, 9,100, 18,100, 37,900, 96,400, 190,000, 355,000, 1,090,000, 2,890,000) (manufactured by Tosoh Corporation)

The mass ratio of resin (b1) to resin (b2) in the fine resin particles (B) is preferably 5/95 to 95/5, more preferably 25/75 to 75/25, and even more preferably 40/60 to 60/40. If the mass ratio of the resin (b1) to the resin (b2) is 5/95 or more, the toner has excellent heat-resistant storage stability. If the mass ratio of the resin (b1) to the resin (b2) is 95/5 or less, the fine resin particles (B) easily form toner particles adhering to the surface of the toner particles.
As a method of producing fine resin particles (B), there are publicly-known manufacturing methods, such as the following manufacturing methods (I) to (V).

(I) A method of seed-polymerizing the constituent monomers of resin (b2) using fine particles of resin (b1) in an aqueous dispersion liquid as seeds.
(II) A method of seed-polymerizing the constituent monomers of resin (b1) using fine particles of resin (b2) in an aqueous dispersion liquid as seeds.
(III) A method of obtaining an aqueous dispersion liquid of fine resin particles by emulsifying a mixture of resin (b1) and resin (b2) into an aqueous medium.
(IV) A method in which a mixture of resin (b1) and the constituent monomer of resin (b2) is emulsified in an aqueous medium, followed by polymerization of the constituent monomer of resin (b2) to obtain an aqueous dispersion liquid of fine resin particles.
(V) A method in which a mixture of resin (b2) and the constituent monomer of resin (b1) is emulsified in an aqueous medium, followed by polymerization of the constituent monomer of resin (b1) to obtain an aqueous dispersion liquid of fine resin particles.

It can be confirmed that the fine resin particles (B) contain shell resin (b1) and core resin (b2) as components in the same particle by observing the element-mapping image of the cross-sectional surface of the fine resin particles (B) using a known surface element analyzer (TOF-SIMSEDX-SEM and the like) and observing the electron microscopic image of the cross-sectional surface of the fine resin particles (B) stained with a dye according to the functional groups contained in the resin (b1) and the resin (b2).
In addition to the fine resin particles (B) containing resin (b1) and resin (b2) as constituent components in the same particles, the fine resin particles obtained by this method may be obtained as a mixture containing fine resin particles containing only resin (b1) as constituent resin component and fine resin particles containing only resin (b2) as constituent resin component. However, in the compounding step described later, the mixture may be used as is or only fine resin particles (B) may be isolated and used.
Specific examples of (I) include the method of dropwise polymerization of the constituent monomer of (b1) to produce an aqueous dispersion liquid of resin particles containing (b1), followed by seed-polymerization of the constituent monomer of (b2) using this as a seed, and the method of emulsion-dispersion liquid of (b1) produced beforehand by solution polymerization or the like in water, followed by seed-polymerization of the constituent monomer of (b2) using this as a seed.
Specific examples of (II) include the method of dropwise polymerization of the constituent monomer of (b2) to produce an aqueous dispersion liquid of resin particles containing (b2), followed by seed-polymerization of the constituent monomer of (b1) using this as a seed, and the method of emulsion-dispersion liquid of (b2) produced beforehand by solution polymerization or the like in water, followed by seed-polymerization of the constituent monomer of (b1) using this as a seed.
Specific examples of (III) include methods such as mixing solutions or melts of (b1) and (b2) prepared beforehand by solution polymerization and emulsifying and dispersing them in an aqueous medium.
Specific examples of (IV) include the method of mixing (b1) produced beforehand by solution polymerization or the like with the constituent monomer of (b2), emulsifying and dispersing this mixture in an aqueous medium, and then polymerizing the constituent monomer of (b2), and the method of producing (b1) in the constituent monomer of (b2) and then emulsifying and dispersing the mixture in an aqueous medium, and then polymerizing the constituent monomer of (b1).

Specific examples of (V) include the method of mixing (b2) produced beforehand by solution polymerization or the like with the constituent monomer of (b1), emulsifying and dispersing this mixture in an aqueous medium, and then polymerizing the constituent monomer of (b1), and the method of producing (b2) in the constituent monomer of (b1) and then emulsifying and dispersing the mixture in an aqueous medium, and then polymerizing the constituent monomer of (b1).

In the present embodiment, any of the above manufacturing methods of (I) to (V) is suitable.

The fine resin particles (B) are preferably used as an aqueous dispersion liquid.

The materials (aqueous media) used for an aqueous dispersion liquid are not particularly limited as long as they are soluble in water and can be selected as appropriate according to the purpose, for example, surfactants, buffers, protective colloids, and the like. These may be used alone or in combination of two or more.

As an aqueous medium used for an aqueous dispersion liquid, any liquid that requires water can be used without any particular limitations, for example, an aqueous solution containing water.

[Inorganic External Additives]

The inorganic external additive is placed on the surface of the toner based particles yet may be placed on the surface of the fine resin particles. That is, the inorganic external additive is placed on the surface of the toner based particles or the surface of the fine resin particles existing between the fine resin particles.

The inorganic external additive covers a surface of oxide of a metal element with hydroxide of a metal element.

The oxides of metal elements are not particularly limited and can be selected as appropriate according to the purpose. Examples of oxides of metal elements include silicon oxide (silica), titanium oxide, aluminum oxide, iron oxide, copper oxide, zinc oxide, chromium tin oxide, cerium oxide, antimony trioxide, magnesium oxide, zirconium oxide, and the like. Among these, silica and titanium dioxide are preferably used, and silica is more preferably used in terms of adhesion to the toner based particles and fine resin particles.

Examples of hydroxides of metal elements include aluminum hydroxide, zinc hydroxide, magnesium hydroxide, and the like. These may be used alone or in combination of two or more.

The top surface of the inorganic external additive should be coated with alkylsilane by surface treatment with a silane coupling agent containing alkylsilane such as isobutylsilane, methyltrimethoxysilane, methyltriethoxysilane, or octyltrimethoxysilane.

Hydrophobized oxide fine particles, hydrophobized silica fine particles, hydrophobized titanium oxide fine particles, and hydrophobized aluminum oxide fine particles can be obtained by treating hydrophilic fine particles with silane coupling agents containing alkylsilanes.

The average particle size of the inorganic external additive is not particularly limited and can be selected according to appropriate purpose. The average particle size of the inorganic external additive is preferably 1 nm to 200 nm and more preferably 10 nm to 150 nm. If the average particle size of the inorganic external additive is within the above preferred range, it is possible to prevent the inorganic external additive from being buried in the toner based particles so that the inorganic external additive function can be effectively exerted, and it is also possible to suppress uneven scratching of the photoconductor surface.

The content of the inorganic external additive is not particularly limited and can be selected as appropriate according to the purpose. The content of the inorganic external additive is preferably 0.5 parts by mass to 6.0 parts by mass and more preferably 1.0 parts by mass to 4.0 parts by mass, based on 100 parts by mass of the toner based particles.

<Inorganic Filler>

Toner based particles are produced by adding an inorganic filler to toner based particles. As the inorganic filler, one or more kinds selected from calcium carbonate, kaolin clay, talc, barium sulfate, and the like may be used. These may be used alone or in combination of two or more. These inorganic fillers may be surface-treated or the like with silane coupling agents, surfactants, metal soaps or the like, or may be adjusted to the desired particle size distribution by classification or the like.

In addition to the above, layered inorganic minerals are preferable as the inorganic filler. Furthermore, layered inorganic minerals modified with organic ions are preferably used. Layered inorganic minerals are formed by laminating layers of several nanometers thick, and modifying with organic ions means introducing organic ions into the ions present between the layers.

Examples of layered inorganic minerals include smectite (montmorillonite, saponite, and the like), kaolin (kaolinite and the like), magadiite, and kanemite. Modified layered inorganic minerals are highly hydrophilic due to their modified layered structure. Therefore, when layered inorganic minerals are used for toner that is dispersed and granulated in an aqueous medium without modifying the layered inorganic minerals, the layered inorganic minerals are transferred into the aqueous medium and the toner cannot be deformed, but by modifying, the hydrophilicity is enhanced. As a result, such modified layered inorganic minerals are refined and deformed during the production of the toner, resulting in presenting the modified layered inorganic minerals on the surface of the toner particles, evenly distributing throughout the toner based particles, performing a charge regulation function, and contributing to low-temperature fixing. In this case, the content of modified layered inorganic minerals in the toner material is preferably in a range from 0.2% by mass to 1.5% by mass.

The modified layered inorganic minerals preferably have the basic crystal structure of smectite system modified with organic cations. Metal anions can also be introduced by replacing some of the bivalent metals in layered inorganic minerals with trivalent metals. However, since metal anions are highly hydrophilic when introduced, layered inorganic compounds in which at least some of the metal anions are modified with organic anions are desirable.

Examples of the organic ion modifiers of the layered inorganic minerals in which at least part of ions contained in the layered inorganic minerals is modified with organic ions, include quaternary alkylammonium salts, phosphonium salts, imidazolium salts, and the like. Among these, quaternary alkylammonium salts is preferably used. Examples of quaternary alkylammonium include trimethylstearylammonium, dimethylstearylbenzylammonium, dimethyl octadecylammonium, oleylbis(2-hydroxyethyl) methylammonium, and the like.

Examples of the organic ion modifiers further include sulfates, sulfonates, carboxylates, and phosphates having branched, unbranched or cyclic alkyl (C1 to C44), alkenyl (C1 to C22), alkoxy (C8 to C32), hydroxyalkyl (C2 to C22), ethylene oxide, propylene oxide, and the like. Among these, carboxylic acids with an ethylene oxide backbone are preferably used.

By modifying layered inorganic minerals with at least a part of organic ions, it is possible to deform the toner with moderate hydrophobicity and non-Newtonian viscosity of the oil phase containing the toner composition and/or the toner composition precursor. In this case, the content of layered inorganic minerals partially modified with organic ions in the toner material is preferably 0.2% by mass to 1.5% by mass.

The layered inorganic minerals partially modified with organic ions can be selected as appropriate, but preferably montmorillonite, bentonite, hectorite, attapulgite, sepiolite, and mixtures thereof. Among them, montmorillonite or bentonite containing Al element is more preferably used because Al element is effective in improving charging ability.

Commercial products of layered inorganic minerals partially modified with organic cations include quaternium 18 bentonites such as Bentone 3, Bentone 38, Bentone 38V (These are manufactured by ELEMENTIS), tiXO GEL VP (manufactured by United catalyst), Clayton 34, Clayton 40, Clayton XL (These are manufactured by Southern Clay Products Inc.); stearalconium bentonites such as Bentone 27 (manufactured by ELEMENTIS), tiXO GEL LG (manufactured by United catalyst), Clayton AF, Clayton APA (These are manufactured by Southern Clay Products Inc.); and quaternium 18/benzalkonium bentonites such as Clayton HT and Clayton PS (These are manufactured by Southern Clay Products Inc.). Clayton AF and Clayton APA are particularly preferably used. In addition, as a layered inorganic mineral partially modified with organic anions, DHT-4 A (manufactured by Kyowa Chemical Industry Co., Ltd.) modified with an organic anion represented by general formula (3) is particularly preferably used. The following general formula (3) includes, for example, HITENOL 330T (manufactured by DKS Co., Ltd.).

$$R_1(OR_2)nOSO_3M \cdots \qquad (3)$$

(In formula (3), $R_1$ represents an alkyl group having a carbon number of 13 and $R_2$ represents an alkylene group having a carbon number of 2 to 6. n represents an integer of 2 to 10, and M represents a univalent metal element.)

<Other Components>

Other components are not particularly limited and can be selected as appropriate according to the purpose. Examples of other components include releasing agent, polymers having a reactive site with active hydrogen group-containing compounds, active hydrogen group-containing compounds, charge control agents, external additives, fluidity improvers, cleanability improvers, magnetic materials, and the like.

[Releasing Agent]

Releasing agents are not particularly limited, and can be appropriately selected from the known agents.

As a releasing agent for waxes, plant-based waxes such as carnauba wax, cotton wax, wood wax, rice wax, and the like; animal waxes such as beeswax, lanolin, and the like; mineral waxes such as ozokerite, seresin, and the like; oil waxes such as paraffin wax, microcrystalline wax, petrolatum wax, and the like; and other natural waxes.

In addition to these natural waxes, synthetic hydrocarbon waxes such as Fischer-Tropsch wax, polyethylene wax, polypropylene wax, and the like; synthetic waxes such as esters, ketones, ethers, and the like; and the like can also be used.

In addition, fatty acid amide compounds such as 12-hydroxystearic acid amide, stearic acid amide, phthalic anhydride imide, chlorinated hydrocarbons, and the like; homopolymers or copolymers of polyacrylates such as poly-n-stearyl methacrylate, poly-n-lauryl methacrylate, and the like which are low-molecular-weight crystalline polymer resins (for example, copolymers of n-stearylacrylate-ethyl methacrylate and the like); a crystalline polymer having a long alkyl group on the side chain, and the like may be used.

Among these, hydrocarbon waxes such as paraffin wax, microcrystalline wax, Fisher-Tropsch wax, polyethylene wax, polypropylene wax, and the like are preferably used.

The melting point of the releasing agent is not particularly limited and can be selected as appropriate according to the purpose, but preferably in a range from 60°C and 95°C.

The releasing agent is more preferably a hydrocarbon wax with a melting point of 60°C or hither and less than 95°C. Since such a releasing agent can effectively act as a releasing agent between the fixing roller and the toner interface, high temperature offset resistance can be improved without applying a releasing agent such as oil to the fixing roller.

In particular, the hydrocarbon wax is preferable because the hydrocarbon wax has little compatibility with the polyester resin A and can function independently of each other, so that the softening effect of the crystalline polyester resin as a binder resin and the offsetting property of the releasing agent are not impaired.

If the melting point of the releasing agent is 60°C or higher, the releasing agent is difficult to melt at low-temperature and the heat-resistant storage stability of the toner can be maintained. If the melting point of the releasing agent is less than 95°C, the melting of the releasing agent by heating during fixing is sufficient and enough offsetting can be obtained.

The content of the releasing agent is not particularly limited and can be selected as appropriate according to the purpose, but preferably in a range from 2 parts by mass to 10 parts by mass and more preferably 3 parts by mass to 8 parts by mass with respect to 100 parts by mass of the toner. If the content of the releasing agent is 2 parts by mass or more, high-temperature offset resistance and low-temperature fixability at the time of fixing can be achieved. If the content of the releasing agent is 10 parts by mass or less, heat-resistant storage stability can be maintained and image blurring and the like can be difficult to occur. If the content of the releasing agent is in a more preferred range, it is advantageous in terms of improving image quality and fixing stability.

[Polymer (prepolymer) having a site that can react with active hydrogen group-containing compounds]

Polymers (hereinafter, referred to as "prepolymer") having reactive sites with active hydrogen group-containing compounds are not particularly limited and can be selected as appropriate according to the purpose. For example, polyol resins, polyacrylic resins, polyester resins, epoxy resins, derivatives thereof, and the like can be used. These may be used alone or in combination of two or more. Among these, polyester resin is preferably used in terms of high fluidity and transparency during melting.

Reactive sites that can react with active hydrogen-group-containing compounds in prepolymers include isocyanate groups, epoxy groups, carboxyl groups, functional groups indicated by -COCl, and the like. These may be used alone or in combination of two or more. Among these, isocyanate groups are preferably used.

The prepolymer is not particularly limited and can be selected as appropriate according to the purpose. A polyester resin having isocyanate groups or the like capable of generating urea bonds is preferably used in that the molecular weight of the polymer component can be easily adjusted and the oil-less low-temperature fixability in dry toners can be ensured, especially in the absence of a release oil coating mechanism on the heating medium for fixing.

[Active Hydrogen Group-Containing Compounds]

The active hydrogen group-containing compound acts as an elongating agent, a crosslinking agent, and the like when a polymer having a reactive site with the active hydrogen group-containing compound undergoes elongating, crosslinking reactions, and the like in an aqueous medium.

The active hydrogen group is not particularly limited and can be selected as appropriate according to the purpose. Examples of the active hydrogen group include a hydroxyl group (an alcoholic hydroxyl group and a phenolic hydroxyl group), an amino group, a carboxyl group, a mercapto group, and the like. These may be used alone or in combination of two or more.

The active hydrogen group-containing compound is not particularly limited and can be selected as appropriate according to the purpose. If the polymer having a reactive site that can react with the active hydrogen group-containing compound is a polyester resin containing isocyanate groups, amines are preferably used in that these can be polymerized with the polyester resin by elongation reaction, crosslinking reaction, and the like.

The amines are not particularly limited and can be selected as appropriate according to the purpose. Examples of the amines include diamines, trivalent or higher amines, amino alcohols, aminomercaptans, amino acids, and amines in which these amino groups are blocked, and the like. These may be used alone or in combination of two or more. Among these, diamine and a mixture of diamine and a small amount of a trivalent or higher amine is preferably used.

The diamines are not particularly limited and can be selected appropriately according to the purpose. Examples of the siamines include aromatic diamines, alicyclic diamines, aliphatic diamines, and the like.

The aromatic diamines are not particularly limited and can be selected as appropriate according to the purpose. Examples of the aromatic diamines include phenylenediamine, diethyltoluenediamine, 4,4'-diaminodiphenylmethane, and the like.

The alicyclic diamines are not particularly limited and can be selected appropriately according to the purpose. Examples of the alicyclic diamines include 4,4'-diamino-3,3'-dimethyldicyclohexylmethane, diaminocyclohexane, isophorone diamine, and the like.

The aliphatic diamines are not particularly limited and can be selected appropriately according to the purpose. Examples of the aliphatic diamines include ethylenediamine, tetramethylenediamine, hexamethylenediamine, and the like.

The trivalent or higher amines are not particularly limited and can be selected as appropriate according to the purpose. Examples of the trivalent or higher amines include diethylenetriamine, triethylenetetramine, and the like.

The amino alcohols are not particularly limited and can be selected as appropriate according to the purpose. Examples of the amino alcohols include ethanolamine, hydroxyethylaniline, and the like.

The aminomercaptans are not particularly limited and can be selected as appropriate according to the purpose. Examples the aminomercaptans include aminoethylmercaptan, aminopropylmercaptan, and the like.

The amino acids are not particularly limited and can be selected as appropriate according to the purpose. Examples of the amino acids include aminopropionic acid, aminocaproic acid, and the like.

The amines in which amino groups are blocked are not particularly limited and can be selected as appropriate according to the purpose. Examples of the amines in which amino groups are blocked include ketimine compounds and oxazolidine compounds obtained by blocking amino groups with ketones such as acetone, methyl ethyl ketone, methyl isobutyl ketone, and the like.

-Polyester Resins Containing Isocyanate Groups-

The polyester resins containing isocyanate groups (hereafter, referred to as "polyester prepolymer having isocyanate groups) are not particularly limited and can be selected appropriately according to the purpose. Examples of the polyester resins containing isocyanate groups include a reaction product of a polyisocyanate with a polyester resin having an active hydrogen group obtained by polycondensation of a polyol and a polyvalent carboxylic acid.

-Polyol-

The polyols are not particularly limited and can be selected as appropriate according to the purpose. Examples of the polyols include diols, trivalent or higher alcohols, a mixture of diols and trivalent or higher alcohols, and the like. These may be used alone or in combination of two or more. Among these, diol and a mixture of diol and a small amount of a trivalent or higher alcohol is preferably used.

The diols are not particularly limited and can be selected as appropriate according to the purpose. Examples of the diols include alkylene glycols such as ethylene glycol, 1,2-propylene glycol, 1,3-propylene glycol, 1,4-butanediol, 1,6-hexanediol, and the like; diols having oxyalkylene groups such as diethylene glycol, triethylene glycol, dipropylene glycol, polyethylene glycol, polypropylene glycol, polytetramethylene glycol, and the like; alicyclic diols such as 1,4-cyclohexanedimethanol, hydrogenated bisphenol A, and the like; alicyclic diols to which alkylene oxides such as ethylene oxide, propylene oxide, and butylene oxide are added; bisphenols such as bisphenol A, bisphenol F, bisphenol S, and the like; alkylene oxide adducts of bisphenols, such as bisphenols to which alkylene oxides such as ethylene oxide, propylene oxide, and butylene oxide are added; and the like. The carbon number of the alkylene glycol is not particularly limited and can be selected as appropriate according to the purpose, but the carbon number of 2 to 12 is preferably used.

Among these, alkylene glycol having a carbon number of 2 to 12 and alkylene oxide adducts of bisphenols are preferably used, and alkylene oxide adducts of bisphenols and a mixture of alkylene oxide adducts of bisphenols and alkylene glycol having a carbon number of 2 to 12 are more preferably used.

The trivalent or higher alcohols are not particularly limited and can be selected as appropriate according to their purpose. Examples of the trivalent or higher alcohol include trivalent or higher aliphatic alcohols, trivalent or higher polyphenols, alkylene oxide adducts of trivalent or higher polyphenols, and the like.

The trivalent or higher aliphatic alcohols are not particularly limited and can be selected as appropriate according to the purpose. Examples of the trivalent or higher aliphatic alcohols include glycerin, trimethylolethane, trimethylolpropane, pentaerythritol, sorbitol, and the like.

The trivalent or higher polyphenols are not particularly limited and can be selected as appropriate according to the purpose. Examples of the trivalent or higher polyphenols include trisphenol PA, phenol novolac, cresol novolac, and the like.

Examples of the trivalent or higher polyphenols alkylene oxide adducts include those in which alkylene oxides such as ethylene oxide, propylene oxide, butylene oxide, and the like are added to trivalent or higher polyphenols.

If using a mixture of diol and above trivalent or higher alcohol, the mass ratio of above trivalent or higher alcohols to diol is not particularly limited and can be selected as appropriate according to the purpose. The mass ratio is preferably in a range from 0.01% by mass to 10% by mass and more preferably in a range from 0.01% by mass to 1% by mass.

-Polyvalent Carboxylic Acid-

The polyvalent carboxylic acids are not particularly limited and can be selected appropriately according to the purpose. Examples of the polyvalent carboxylic acids include dicarboxylic acid, trivalent or higher carboxylic acid, a mixture of dicarboxylic acid and trivalent or higher carboxylic acid, and the like. These may be used alone or in combination of two or more. Among these, dicarboxylic acid and a mixture of dicarboxylic acid and a small amount of trivalent or higher polyvalent carboxylic acid is preferably used.

The dicarboxylic acids are not particularly limited and can be selected appropriately according to the purpose. Examples of the dicarboxylic acids include divalent alkanoic acid, divalent alkenoic acid, aromatic dicarboxylic acid, and the like.

The divalent alkanoic acids are not particularly limited and can be selected as appropriate according to the purpose. Examples of the divalent alkanoic acids include succinic acid, adipic acid, sebacic acid, and the like.

The divalent alkenoic acids are not particularly limited and can be selected as appropriate according to the purpose. The divalent alkenoic acid having a carbon number of 4 to 20 is preferably used. The divalent alkenoic acids having a carbon number of 4 to 20 are not particularly limited and can be selected as appropriate according to the purpose, for example, maleic acid, fumaric acid, and the like.

The aromatic dicarboxylic acids are not particularly limited and can be selected as appropriate according to the purpose. The aromatic dicarboxylic acids having a carbon number of 8 to 20 is preferably used. The aromatic dicarboxylic acid having a carbon number of 8 to 20 are not particularly limited and can be selected appropriately according to the purpose, for example, phthalic acid, isophthalic acid, terephthalic acid, naphthalenedicarboxylic acid, and the like.

The trivalent or higher carboxylic acids are not particularly limited and can be selected as appropriate according to the purpose, for example, trivalent or higher aromatic carboxylic acids and the like.

Trivalent or higher aromatic carboxylic acids are not particularly limited and can be selected as appropriate according to the purpose. The trivalent or higher aromatic carboxylic acids having a carbon number of 9 to 20 are preferably used. The trivalent or higher aromatic carboxylic acids having a carbon number of 9 to 20 are not particularly limited and can be selected as appropriate according to the purpose, for example, trimellitic acid, pyromellitic acid, and the like.

As polyvalent carboxylic acids, acid anhydrides or lower alkyl esters of either dicarboxylic acids, trivalent or higher carboxylic acids, and a mixture of dicarboxylic acids and trivalent or higher carboxylic acids may be used.

The lower alkyl esters are not particularly limited and can be selected as appropriate according to the purpose, for example, methyl ester, ethyl ester, isopropyl ester, and the like.

When a mixture of dicarboxylic acid and trivalent or higher carboxylic acid is used, the mass ratio of trivalent or higher carboxylic acid to dicarboxylic acid is not particularly limited and can be selected as appropriate according to the purpose. The mass ratio is preferably in a range from 0.01% by mass to 10% by mass and more preferably in a range from 0.01% by mass to 1% by mass.

In polycondensation of polyols and polyvalent carboxylic acids, the equivalence ratio of the hydroxyl group of the polyol to the carboxyl group of the polyvalent carboxylic acid is not particularly limited and can be selected as appropriate according to the purpose. The equivalence ratio is preferably in a range from 1 to 2, more preferably in a range from 1 to 1.5, and particularly preferably in a range from 1.02 to 1.3.

The content of the constituent units derived from polyols in the polyester prepolymer having isocyanate groups is not particularly limited and can be selected as appropriate according to the purpose. The content is preferably in a range from 0.5% by mass to 40% by mass, more preferably in a range from 1% by mass to 30% by mass, and particularly preferably in a range from 2% by mass to 20% by mass. If the content is 0.5% by mass or more, the high-temperature offset resistance can be maintained, the heat-resistant storage stability and low-temperature fixability of the toner can be compatible. If the content is 40% by mass or less, the low-temperature fixability can be maintained.

-Polyisocyanate-

The polyisocyanates are not particularly limited and can be selected as appropriate according to the purpose. Examples of the polyisocyanate include aliphatic diisocyanates, alicyclic diisocyanates, aromatic diisocyanates, aromatic aliphatic diisocyanates, isocyanurates, those blocked with phenolic derivatives, oximes, caprolactams, and the like.

The aliphatic diisocyanates are not particularly limited and can be selected as appropriate according to the purpose. Examples of the aliphatic diisocyanates include tetramethylenediisocyanate, hexamethylenediisocyanate, methyl 2,6-diisocyanatocaproate, octamethylenediisocyanate, decamethylenediisocyanate, dodecamethylenediisocyanate, tetradecamethylenediisocyanate, trimethylhexanediisocyanate, tetramethylhexanediisocyanate, and the like.

The alicyclic diisocyanates are not particularly limited and can be selected appropriately according to the purpose, for example, isophorone diisocyanate, cyclohexyl methane diisocyanate, and the like.

The aromatic diisocyanates are not particularly limited and can be selected as appropriate according to the purpose. Examples of the aromatic diisocyantes include tolylene diisocyanate, diisocyanatodiphenylmethane, 1,5-naphthylene diisocyanate, 4,4'-diisocyanato diphenyl, 4,4'-diisocyanato-3,3'-dimethyldiphenyl, 4,4'-diisocyanato-3-methyldiphenylmethane, 4,4'-diisocyanato-diphenyl ether, and the like.

The aromatic aliphatic diisocyanates are not particularly limited and can be selected as appropriate according to the purpose, such as $\alpha,\alpha,\alpha',\alpha'$-tetramethylxylylene diisocyanate and the like.

The isocyanurates are not particularly limited and can be selected appropriately according to the purpose. Examples of the isocyanurates include tris(isocyanatoalkyl) isocyanurates, tris(isocyanatocycloalkyl) isocyanurates, and the like. These may be used alone or in combination of two or more.

In the case of reacting a polyisocyanate with a polyester resin having a hydroxyl group, the equivalence ratio of the isocyanate group of the polyisocyanate to the hydroxyl group of the polyester resin is not particularly limited and can be selected as appropriate according to the purpose. The equivalence ratio is preferably in a range from 1 to 5, more preferably in a range from 1.2 to 4, and particularly preferably in a range from 1.5 to 3. If the equivalence ratio is 1 or more, the high-temperature offset resistance can be maintained. If the equivalence ratio is 5 or less, the low-temperature fixability can be maintained.

The content of the constituent units derived from polyisocyanates in the polyester prepolymer having isocyanate groups is not particularly limited and can be selected as appropriate according to the purpose. The content is preferably in a range from 0.5% by mass to 40% by mass, more preferably in a range from 1% by mass to 30% by mass, and particularly preferably in a range from 2% by mass to 20% by mass. If the above content is 0.5% by mass or more, high-temperature offset resistance can be maintained. If the content is 40% by mass or less, low-temperature fixability can be maintained.

The average number of isocyanate groups per molecule of a polyester prepolymer having isocyanate groups is not particularly limited and can be selected as appropriate according to the purpose. The average number is preferably 1 or more, more preferably in a range from 1.2 to 5, and particularly preferably in a range from 1.5 to 4. If the average number is 1 or more, the decrease in the molecular weight of the urea-modified polyester-based resin is suppressed and the high-temperature offset resistance can be maintained.

The mass ratio of a polyester prepolymer having isocyanate groups to a polyester resin containing at least 50 mol% of the propylene oxide adduct of bisphenols in the polyvalent alcohol component and having a specific hydroxyl and acid value is not particularly limited and can be selected as appropriate according to the purpose. The mass ratio is preferably more than 5/95 but less than 25/75, and more preferably in a range from 10/90 to 25/75. If the mass ratio exceeds 5/95, the high-temperature offset resistance can be maintained. If the mass ratio is less than 25/75, the low-temperature fixability and image gloss can be exerted.

[Charge Control Agent]

The charge control agents are not particularly limited and can be selected appropriately according to the purpose. Examples of the charge control agents include nigrosine-based dyes, triphenylmethane-based dyes, chromium-containing metal complex dyes, molybdic acid chelate pigments, rhodamine-based dyes, alkoxy amines, quaternary ammonium salts (including fluorine-modified quaternary ammonium salts), alkylamides, single substances or compounds of phosphorus, single substances or compounds of tungsten, fluorine-based activators, metal salicylate salts, metal salts of salicylic acid derivatives, and the like. Specifically, Bontron 03 as a nigrosine dye, Bontron P-51 as a quaternary ammonium salt, Bontron S-34 as a metal-containing azo dye, E-82 as an oxynaphthoic acid metal complex, E-84 as a salicylic acid metal complex, E-89 as a phenolic condensate (manufactured by Orient Chemical Industry Co., Ltd.), TP-302 as a quaternary ammonium salt molybdenum complex, TP-415 (manufactured by Hodogaya Chemical Co., Ltd.), LRA-901, LR-147 as a boron complex (manufactured by Carlit Co., Ltd.), copper phthalocyanine, perylene, quinacridone, azo pigments, and other polymeric compounds with functional groups such as sulfonic acid groups, carboxyl groups, quaternary ammonium salts, and the like.

The content of the charge control agent is not particularly limited and can be selected appropriately according to the purpose. The content is preferably in a range from 0.1 parts by mass to 10 parts by mass and more preferably in a range from 0.2 parts by mass to 5 parts by mass with respect to 100 parts by mass of the toner. If the content of the charge control agent is 10 parts by mass or less, the chargeability of the toner is not too large and the effect of the main charge control agent can be maintained. As a result, the increase in the electrostatic attraction force with the developing roller can be suppressed and the fluidity and image density of the developer can be maintained. These charge control agents can be dissolved and dispersed after melt-kneading with the masterbatch and resin, directly dissolved and dispersed in an organic solvent, or immobilized on the surface of the toner after preparing the toner based particles.

The acid value of the toner is not particularly limited and can be selected as appropriate according to the purpose. The acid value is preferably in a range from 0.5 mgKOH/g to 40 mgKOH/g in terms of controlling the low-temperature fixability (lower limit temperature for fixing), the hot offset generation temperature, and the like. If the acid value is 0.5 mgKOH/g or more, the effect of improving dispersion liquid stability due to the base during manufacturing can be obtained, and the tendency of elongation and/or crosslinking reaction to proceed when the prepolymer is used can be suppressed, and manufacturing stability can be maintained. If the acid value is 40 mgKOH/g or less, the elongation and/or crosslinking reaction is sufficient when the prepolymer is used, and the high-temperature offset resistance can be exerted.

Although the glass transition temperature (Tg) of the toner is not particularly limited and can be selected appropriately according to the purpose, the glass transition temperature (Tg 1st) calculated at the first temperature increase in the DSC measurement is preferably 45°C or higher and lower than 65°C, and more preferably 50°C or higher and 60°C or lower. As a result, the low-temperature fixability, heat-resistant storage stability, and high durability can be obtained. If the Tg 1st is 45°C or higher, the blocking in the developing device and filming on the photoconductor are suppressed. If the Tg 1st is 65°C or lower, the decrease in the low-temperature fixability is suppressed.

In addition, the glass transition temperature (Tg 2nd) calculated at the second temperature increase in the DSC measurement of the toner is preferably in a range from 20°C or higher and less than 40°C. If the Tg 2nd is 20°C or higher, the blocking in the developing device and the filming on the photoconductor are suppressed. If the Tg 2nd is 40°C or lower, the decrease in the low-temperature fixability is suppressed.

The volume average particle size of the toner is not particularly limited and can be selected as appropriate according to the purpose. The volume average is preferably in a range from 3 to 7 um. The ratio of the volume average particle size to the number average particle size is preferably 1.2 or less. It is also prefereable for components having a volume average particle size of 2 um or less to be contained in a range from 1 or more to 10 or less percent.

<<Method of Measuring Acid and hydroxyl values>>

The hydroxyl value can be measured using the method in accordance with JIS K 0070-1966. Specifically, first, 0.5 g of a sample is accurately weighted in a 100 mL volumetric flask, and 5 mL of acetylation reagent is added to the sample. Then, the mixture is heated in a warm bath at $100\pm5$°C for 1 to 2 hours, followed by removing the flask from the warm bath and allow the mixture to cool. Water is then added and shaken to decompose acetic anhydride. Next, to completely decompose the acetic anhydride, the flask is again heated in the warm bath for at least 10 minutes, followed by cooling the mixture and thoroughly washing the flask walls with an organic solvent. Furthermore, hydroxyl values are measured at 23°C using the potentiometric automatic titrator DL-53 Titrator (manufactured by METTLER TOLEDO) and the electrode DG 113-SC (manufactured by METTLER TOLEDO), and analyzed using the analysis software LabX Light Version 1.00.000. A mixture solvent of 120 mL of toluene and 30 mL of ethanol is used for calibration of the apparatus. At this time, the measurement conditions are as follows.

[Measurement Conditions]

·Stir

Speed[%]: 25
Time[s]: 15

·E-V titration curve (EQP titration)

Titrant/Sensor

Titrant: $CH_3ONa$

Concentration [mol/L]: 0.1
Sensor: DG115
Unit of measurement: mV

Predispensing to volume

Volume[mL]: 1.0
Wait time[s]: 0
Titrant addition: Dynamic
dE(set) [mV] : 8.0
dV(min) [mL]: 0.03
dV(max) [mL]: 0.5

Measure mode: Equilibrium controlled

dE[mV]: 0.5
dt[s]: 1.0
t(min)[s]: 2.0
t(max)[s]: 20.0

Recognition

Threshold: 100.0
Steepest jump: only No
Range: No
Tendency: None

Termination

at maximum volume[mL]: 10.0
at potential: No
at slope: No
after number EQPs: Yes
n = 1
comb. termination conditions: No

Evaluation

Procedure: Standard
Potential 1: No
Potential 2: No
Stop for reevaluation: No

The acid value can be measured using the method in accordance with JIS K 0070-1992. Specifically, first, 0.5 g of the sample (0.3 g of ethyl acetate soluble) is added into a 120 mL of toluene, and the mixture is stirred to dissolve at 23°C for 10 hours. Next, 30 mL of ethanol is added to the mixture to obtain a sample solution. If the sample does not dissolve, a solvent such as dioxane, tetrahydrofuran, or the like can be used. Furthermore, acid values are measured at 23°C using the potentiometric automatic titrator DL-53 Titrator (manufactured by METTLER TOLEDO) and the electrode DG 113-SC (manufactured by METTLER TOLEDO), and analyzed using the analysis software LabX Light Version 1.00.000. A mixture solvent of 120 mL of toluene and 30 mL of ethanol is used for calibration of the apparatus. The measurement conditions are the same as for the hydroxyl value described above.

The acid value can be measured as described above. Specifically, the sample is titrated with a prespecified 0.1 N potassium hydroxide/alcohol solution. The acid value is calculated based on the titration amount as follows: acid value [mgKOH/g] = titration amount [mL] $\times$ N $\times$ 56.1 [mg/mL]/sample mass [g] (where N is a factor of 0.1 N potassium hydroxide/alcohol solution).

<<Method of Measuring Melting Point and Glass Transition Temperature (Tg)>>

The melting point, glass transition temperature (Tg) can be measured using, for example, a DSC system (differential scanning calorimeter) (DSC-60, manufactured by Shimadzu Corporation). Specifically, the melting point and glass transition temperature of the target sample can be measured by the following procedure.

First, about 5.0 mg of the target sample is placed in an aluminum sample container, and then the same container is placed on a holder unit and set in an electric furnace. The container is then heated under a nitrogen atmosphere from 0°C to 150°C at a heating rate of 10°C/min. The container is then cooled from 150°C to 0°C at a cooling rate of 10°C/min, and heated to 150°C at a heating rate of 10°C/min. The DSC curve is measured using a differential scanning calorimeter (DSC-60, manufactured by Shimadzu Corporation).

From the obtained DSC curve, the DSC curve at the first temperature increase can be selected using the analysis program "Endothermic Shoulder Temperature" in the DSC-60 system to obtain the glass transition temperature at the first temperature increase of the target sample. The "Endothermic Shoulder Temperature" can be used to select the DSC curve at the second temperature increase to obtain the glass transition temperature at the second temperature increase of the target sample.

From the obtained DSC curve, the DSC curve at the first temperature increase can be selected using the analysis program "Endothermic Peak Temperature" in the DSC-60 system to obtain the melting point at the first temperature increase of the target sample. The "Endothermic Peak Temperature" can be used to select the DSC curve at the second temperature increase to obtain the melting point at the second temperature increase of the target sample.

In the present embodiment, the glass transition temperature at the first temperature increase when the toner is used as the target sample is Tg 1st, and the glass transition temperature at the second temperature increase is Tg 2nd.

In the present embodiment, the melting point and Tg of each component at the second temperature increase are defined as the melting point and Tg of each target sample.

<<Method of Measuring Particle Size Distribution>>

The volume average particle size (D4), the number average particle size (Dn), and the ratio (D4/Dn) of the toner can be measured using, for example, Coulter Counter TA-II, Coulter Multisizer II (both manufactured by Coulter), and the like. The Coulter Multisizer II was used in the present invention. The measurement method is described below.

First, a 0.1 mL to 5 mL of surfactant (preferably polyoxyethylene alkyl ether (a nonionic surfactant)) as a disperser is added to a 100 mL to 150 mL of an electrolytic solution. The electrolytic solution is a 1% NaCl aqueous solution prepared using primary sodium chloride, for example, ISOTON-II (manufactured by Coulter) can be used. A 2 mg to 20 mg of measured sample is further added to the mixture. The electrolytic aqueous solution in which the sample is suspended is subjected to dispersion liquid treatment for about 1 to 3 minutes by an ultrasonic disperser, and the volume and number of toner particles or toner are measured by the measuring device using a 100 um aperture as an aperture to calculate the volume distribution and number distribution. From the obtained distribution, the volume average particle size (D4) and the number average particle size (Dn) of the toner can be obtained.

As a channel, 13 channels of 2.00 um or more and less than 2.52 um; 2.52 um or more and less than 3.17 $\mu$m; 3.17 um or more and less than 4.00 $\mu$m; 4.00 um or more and less than 5.04 $\mu$m; 5.04 um or more and less than 6.35 um; 6.35 um or more and less than 8.00 $\mu$m; 8.00 um or more and less than 10.08 um; 10.08 um or more and less than 12.70 um; 12.70 um or more and less than 16.00 um; 16.00 um or more and less than 20.20 $\mu$m; 20.20 um or more and less than 25.40 $\mu$m; 25.40 um and less than 32.00 $\mu$m; and 32.00 um or more and less than 40.30 um are used. The particles of 2.00 um or more and less than 40.30 um in diameter are subjected to be target.

[External Additives]

In addition to the oxide fine particles, inorganic fine particles or hydrophobicized inorganic fine particles can be used in combination as an external additive, but the average particle size of the hydrophobicized primary particles is preferably in a range from 1 nm to 200 nm, and the inorganic fine particles in a range from 10 nm to 150 nm are more preferably used. It is preferable to include at least one type of inorganic fine particle with an average diameter of 30 nm or less for hydrophobically treated primary particles and at least one type of inorganic fine particle with an average diameter of 50 nm or more. If the average particle size of the inorganic fine particles is 50 nm or more, the particles are more likely to be dammed by the blade, thereby improving the filming and cleaning. Furthermore, the specific surface area by the BET method is preferably from 20 $m^2$/g to 500 $m^2$/g.

The external additives are not particularly limited and can be selected appropriately according to the purpose. Examples of the external additives include silica fine particles, hydrophobic silica, fatty acid metal salts (for example, zinc stearate, aluminum stearate, and the like), metal oxides (for example, titanium oxide, aluminum oxide, tin oxide, antimony oxide, and the like), fluoropolymers, and the like.

The content of the external additive is not particularly limited and can be selected as appropriate according to the purpose. The content is preferably in a range from 0.5 parts by mass to 6.0 parts by mass and more preferably in a range from 1.0 parts by mass to 4.0 parts by mass with respect to 100 parts by mass of the toner based particles.

(Other External Additives)

Other additives include titanium dioxide fine particles and aluminum oxide fine particles. Titanium dioxide particles include, for example, P-25 (manufactured by AEROSIL Japan), STT-30, STT-65C-S (all manufactured by Titan Kogyo, Ltd.), TAF-140 (manufactured by FUJI TITANIUM INDUSTRY CO.,LTD.), MT-150W, MT-500B, MT-600B, MT-150A (all manufactured by TAYCA Co., Ltd.), and the like.

Hydrophobically treated titanium dioxide particles include, for example, T-805 (manufactured by AEROSIL JAPAN LTD.), STT-30A, STT-65S-S (both manufactured by Titan Kogyo, Ltd.), TAF-500T, TAF-1500T (both manufactured by FUJI TITANIUM INDUSTRY CO.,LTD.), MT-100S, MT-100T (both manufactured by TAYCA Co., Ltd.), IT-S (manufactured by ISHIHARA SANGYO KAISHA, LTD.), and the like.

Hydrophobized oxide fine particles, hydrophobized silica fine particles, hydrophobized titanium oxide fine particles, and hydrophobized aluminum oxide fine particles can be obtained by treating hydrophilic fine particles with silane coupling agents such as methyltrimethoxysilane, methyltriethoxysilane, octyltrimethoxysilane, and the like. If necessary, silicone oil-treated oxide and inorganic fine particles, in which silicone oil is heat-treated into inorganic fine particles, are also suitably used.

Examples of the silicone oil include dimethylsilicone oil, methylphenylsilicone oil, chlorphenylsilicone oil, methylhydrogensilicone oil, alkyl-modified silicone oil, fluorine-modified silicone oil, polyether-modified silicone oil, alcohol-modified silicone oil, amino-modified silicone oil, epoxy-modified silicone oil, epoxy-polyether-modified silicone oil, phenol-modified silicone oil, carboxyl-modified silicone oil, mercapto-modified silicone oil, acrylic, methacrylic-modified silicone oil, $\alpha$-methylstyrene-modified silicone oil, and the like.

Examples of the inorganic fine particles include silica, aluminum oxide, titanium oxide, barium titanate, magnesium titanate, calcium titanate, strontium titanate, iron oxide, copper oxide, zinc oxide, tin oxide, silica sand, clay, mica, silica stone, siliceous earth, chromium oxide, cerium oxide, pengarra, antimony trioxide, magnesium oxide, zirconium oxide, barium sulfate, barium carbonate, calcium carbonate, silicon carbide, silicon nitride, and the like. Among these, silica and titanium dioxide are particularly preferably used.

The content of the external additives is not particularly limited and can be selected appropriately according to the purpose. The content is preferably in a range from 0.1% by mass to 5% by mass and more preferably in a range from 0.3% by mass to 3% by mass with respect to the toner.

The average particle size of the primary particles of the inorganic fine particles is not particularly limited and can be selected as appropriate according to the purpose. The average particle size is preferably 200 nm or less and more preferably in a range from 10 nm to 100 nm. If the average particle size is smaller than the above range, the inorganic fine particles will be buried in the toner and the function of external additive will not be effectively exerted. Also, if the average particle size is larger than the above range, the photoconductor surface is unevenly damaged, and it is not favorable.

[Fluidity Improver]

The fluidity improvers are not particularly limited and can be selected as appropriate according to the purpose as long as the surface treatment is carried out to increase the hydrophobicity and prevent deterioration of flow and charging characteristics even under high humidity. Examples of the fluidity improvers include silane coupling agents, silylating agents, silane coupling agents having alkyl fluoride groups, organic titanate coupling agents, aluminum coupling agents, silicone oils, modified silicone oils, and the like. It is particularly preferable that silica and titanium oxide are surface-treated with such fluidity improvers and used as hydrophobic silica and hydrophobic titanium oxide.

[Cleaning Improvers]

The cleaning improvers are not particularly limited as long as the cleaning improver is added to the toner to remove the developer remaining in the photoconductor or the primary transfer medium after transfer, and can be selected appropriately according to the purpose. Examples of the cleaning improvers include fatty acid metal salts such as zinc stearate, calcium stearate, stearic acid, and the like, polymer fine particles produced by soap-free emulsion polymerization such as polymethyl methacrylate fine particles, polystyrene fine particles, and the like. The polymer fine particles with a relatively narrow particle size distribution are preferably used, and the polymer fine particles with a volume average particle size of 0.01 um to 1 um are favorable.

[Magnetic Materials]

The magnetic materials are not particularly limited and can be selected appropriately according to the purpose. Examples of the magnetic materials include iron powder, magnetite, ferrite, and the like. Among these, white colored materials are preferably used in terms of color tone.

<Method of Manufacturing Toners>

Although the methods of manufacturing toners are not particularly limited, the method can be selected as appropriate according to the purpose. The toner is preferably granulated by dispersing an oil phase containing at least an amorphous polyester resin, a crystalline polyester resin, a releasing agent, and a colorant in an aqueous medium.
One example of a method of manufacturing the toner is the well-known dissolved suspension method.
In addition, as another example of a method of manufacturing the toner, a method of forming toner based particles while producing a product (hereafter, sometimes referred to as "adhesive base material") formed by an elongation reaction and/or crosslinking reaction between an active hydrogen group-containing compound and a polymer having a site capable of reacting with the active hydrogen group-containing compound is shown below. In such a method, preparation of an aqueous medium, preparation of an oil phase containing a toner material, emulsification or dispersion liquid of the toner material, removal of an organic solvent, and the like are performed.

[Preparation of Aqueous Media (Aqueous Phase)]

The preparation of the aqueous medium can be carried out, for example, by dispersing resin particles in the aqueous medium. The amount of resin particles added to the aqueous medium is not particularly limited and can be selected as appropriate according to the purpose. The amount is preferably in a range from 0.5% by mass to 10% by mass.
The resin particles are not particularly limited and can be selected appropriately according to the purpose. Examples of the resin particles include surfactants, poorly water-soluble inorganic compound dispersers, polymeric protective colloids, and the like. One of these may be used alone, or two or more may be used in combination, of which surfactants are preferably used.
The aqueous-based medium is not particularly limited and can be selected as appropriate according to the purpose, for example, water, a solvent miscible with water, a mixture of these, etc. They may be used alone or in combination of two or more. Among these, water is preferable.
The solvents that can be miscible with water are not particularly limited and can be selected as appropriate according to the purpose. Examples of the solvents include alcohols, dimethylformamide, tetrahydrofuran, cellosolves, lower ketones, and the like.
The alcohol is not particularly limited and can be selected as appropriate according to the purpose, for example, methanol, isopropanol, ethylene glycol, and the like.
The lower ketones are not particularly limited and can be selected as appropriate according to the purpose, for example, acetone, methyl ethyl ketone, and the like.

[Preparation of Oil Phase]

The preparation of the oil phase containing the toner material can be carried out by dissolving or dispersing the toner material containing active hydrogen group-containing compounds, polymers having reactive sites with active hydrogen group-containing compounds, crystalline polyester resins, amorphous polyester resins, releasing agents, hybrid resins, colorants, and the like in an organic solvent.
Although the organic solvent is not particularly limited and can be appropriately selected according to the purpose, it is preferable to use an organic solvent with a boiling point of less than 150°C because an organic solvent makes it easier to remove the organic solvent later.
The organic solvents with a boiling point of less than 150°C are not particularly limited and can be selected as appropriate according to the purpose. Examples of the organic solvents include toluene, xylene, benzene, carbon tetrachloride, methylene chloride, 1,2-dichloroethane, 1,1,2-trichloroethane, trichloroethylene, chloroform, monochlorobenzene, dichloroethylidene, methyl acetate, ethyl acetate, methyl ethyl ketone, methyl isobutyl ketone, and the like. These may be used alone or in combination of two or more. Among these, ethyl acetate, toluene, xylene, benzene, methylene chloride, 1,2-dichloroethane, chloroform, carbon tetrachloride, and the like are preferably used, and ethyl acetate is more preferably used.

[Emulsification or Dispersion Liquid]

Emulsification or dispersion liquid of the toner material can be performed by dispersing the oil phase containing the toner material in an aqueous medium. When emulsifying or dispersing the toner material, the active hydrogen group-containing compound and a polymer having a reactive site with the active hydrogen group-containing compound are subjected to an elongation reaction and/or crosslinking reaction to form an adhesive base material.

The adhesive base material may be produced, for example, by emulsifying or dispersing an oil phase containing a polymeric material having reactivity to active hydrogen groups, such as a polyester prepolymer having isocyanate groups, together with a compound containing active hydrogen groups, such as amines, in an aqueous medium, and the two may be generated by elongation and/or crosslinking reactions in the aqueous medium. The oil phase containing the toner material may be emulsified or dispersed in an aqueous medium to which a compound having active hydrogen groups has been added in advance, and the two may be generated by elongation and/or crosslinking reactions in the aqueous medium. After emulsifying or dispersing the oil phase containing the toner material in an aqueous medium, a compound with active hydrogen groups may be added, and the compound may be produced by elongation and/or crosslinking reaction of the two from the particle interface in the aqueous medium. In the case of elongation and/or crosslinking reaction of the two from the particle interface, urea modified polyester resin is preferentially formed on the surface of the generated toner, and a concentration gradient of urea modified polyester resin can be established in the toner.

The reaction conditions (reaction time, reaction temperature) for forming the adhesive base material are not particularly limited, and can be appropriately selected according to the combination of the active hydrogen group-containing compound and a polymer having a reactive site with the active hydrogen group-containing compound.

The reaction time is not particularly limited and can be selected as desired. The reaction time is preferably 10 minutes to 40 hours and more preferably 2 hours to 24 hours.

The reaction temperature is not particularly limited and can be selected as desired, but is preferably from 0°C to 150°C and more preferably from 40°C to 98°C.

The method of stably forming a dispersing solution containing a polymer with a site that can react with an active hydrogen group-containing compound such as a polyester prepolymer with an isocyanate group in an aqueous medium is not particularly limited and can be selected as appropriate according to the purpose. Such methods include, for example, a method in which an oil phase prepared by dissolving or dispersing a toner material in a solvent is added to an aqueous medium phase and dispersed by shear force.

A disperser for dispersion is not particularly limited and can be selected according to the purpose. Examples of the disperser include low-speed shear dispersers, high-speed shear dispersers, friction dispersers, high-pressure jet dispersers, ultrasonic dispersers, and the like. Among these, a high-speed shear disperser is preferably used because the particle size of the dispersion liquid (oil droplets) can be controlled in a range from 2 um to 20 um.

When a high-speed shear disperser is used, conditions such as the number of revolutions, the dispersion time, and the dispersion temperature can be appropriately selected according to the purpose.

The number of revolutions is not particularly limited and can be selected as desired. The number of revolutions is preferably 1,000 rpm to 30,000 rpm and more preferably 5,000 rpm to 20,000 rpm.

The dispersion time is not particularly limited and can be selected as appropriate according to the purpose, but in the case of the batch method, 0.1 minutes to 5 minutes is preferable.

The dispersion temperature is not particularly limited and can be selected as appropriate according to the purpose, but under pressure, 0 to 150°C is preferable and 40 to 98°C is more preferable. In general, dispersion is easier when the dispersion temperature is higher.

When emulsifying or dispersing the toner material, the amount of the aqueous medium to be used is not particularly limited and can be selected as appropriate according to the purpose. The amount is preferably in a range from 50 parts by mass to 2,000 parts by mass and more preferably in a range from 100 parts by mass to 1,000 parts by mass with respect to 100 parts by mass of the toner material.

If the amount of the aqueous medium used is less than 50 parts by mass, the dispersion state of the toner material may deteriorate and the toner based particles of the predetermined particle size may not be obtained. If the amount exceeds 2,000 parts by mass, the production cost may be high.

When emulsifying or dispersing the oil phase containing the toner material, a disperser is preferably used from the viewpoint of stabilizing the dispersion liquid such as an oil droplet to achieve a desired shape and sharpen the particle size distribution.

The disperser is not particularly limited and can be selected appropriately according to the purpose. Examples of disperser include surfactants, poorly water-soluble inorganic compound dispersants, polymeric protective colloids, and the like. These may be used alone or in combination of two or more. Among these, surfactants are preferably used.

The surfactants are not particularly limited and can be selected appropriately according to the purpose. Examples of surfactants include anionic surfactants, cationic surfactants, nonionic surfactants, amphoteric surfactants, and the like.

The anionic surfactants are not particularly limited and can be selected appropriately according to the purpose. Examples of anionic surfactants include alkylbenzene sulfonates, $\alpha$-olefin sulfonates, phosphates, and the like. Among these, those having a fluoroalkyl group are preferably used.

The catalysts may be used for elongation and/or crosslinking reactions in the formation of the adhesive base material.

The catalysts are not particularly limited and can be selected appropriately according to the purpose, for example, dibutyltin laurate, dioctyltin laurate, and the like.

[Removal of Organic Solvents]

The methods of removing organic solvents from the dispersion liquid such as emulsified slurries are not particularly limited and the can be selected as appropriate according to the purpose. Examples of the methods include a method to evaporate organic solvents in oil droplets by gradually raising the temperature of the entire reaction system, a method to remove organic solvents in oil droplets by spraying the dispersion liquid into a dry atmosphere, and the like.

When the organic solvent is removed, toner based particles are formed. The toner based particles can be washed, dried, and the like, and further classified and the like. The classification may be carried out by removing the fine particles by cyclone, decanter, centrifugation or the like in the liquid, or the classification may be carried out after drying.

The obtained toner based particles may be mixed with particles such as the external additive and the charge control agent. At this time, the desorption of particles such as the external additive from the surface of the toner based particles can be suppressed by applying a mechanical impact force.

The methods of applying mechanical impact force are not particularly limited and can be selected as appropriate according to the purpose. The methods include a method of applying impact force to a mixture using a blade rotating at high speed, a method of introducing the mixture into a high-speed air stream and accelerating it to cause particles to collide with each other or with a suitable impact plate, and the like.

The equipment used in the method is not particularly limited and can be selected as appropriate according to the purpose. Examples of the equipement include an ang mill (manufactured by Hosokawa Micron Co., Ltd.), an equipment modified from an I-type mill (manufactured by Nippon Pneumatic Mfg.Co., Ltd.) to reduce the crushing air pressure, a hybridization system (manufactured by Nara Machinery Co., Ltd.), a cryptron system (manufactured by Kawasaki Heavy Industries, Ltd.), an automatic mortar, and the like.

Thus, the toner according to one embodiment is provided with a plurality of organic resin particles and inorganic external additives on the surface of the toner based particles containing the binder resin, the colorant, and the wax, and the coverage of the organic fine resin particles is 30% to 70%, and at least one of the inorganic external additives covers metal element hydroxides on metal element oxide surfaces. In the toner of one embodiment, the coverage between adjacent organic fine resin particles present on the surface of the toner based particles is adjusted to be 30% to 70%, so that the low-temperature fixability and heat-resistant storage stability can be well compatible. In addition, since many organic fine resin particles are present on the surface of the toner based particles, the inorganic external additive can make it difficult for the inorganic external additive to be buried on the surface of the toner based particles.

In addition, the toner according to one embodiment has excellent charging stability by using an oxide of a metal element as the base material of the inorganic external additive, and by coating the surface of the base material of the inorganic external additive with a hydroxide of a metal element, the rising of charge of the toner can be enhanced and the scattering of the toner can be suppressed. Furthermore, in the toner according to one embodiment, intermolecular interactions occur between the surface of the organic resin particles present on the surface of the toner based particles and the hydroxyl groups on the surface of the inorganic external additive. Therefore, the inorganic external additive can be prevented from being released from the toner based particles.

Therefore, the toner according to one embodiment can have both low-temperature fixability and heat-resistant storage stability, suppress contamination of the cleaning member and the photoconductor, and have excellent charging stability.

The toner according to one embodiment can coat the top surface of the inorganic external additive with alkylsilane. Thus, since the surface hydrophobicity of the toner according to one embodiment is enhanced, the level of charging can be improved, that is, the excellent charging stability and rising of charge can be improved.

The toner according to one embodiment can use silica as an oxide of metal element. Thus, the toner according to one embodiment can further enhance the charging stability.

In the toner according to one embodiment, at least one kind selected from the group consisting of aluminum, zinc, and magnesium can be used for the hydroxide of the inorganic external additive. Thus, the toner according to one embodiment can more easily cause intermolecular interactions between the surface of the organic resin particles present on the surface of the toner based particles and the hydroxyl group present on the surface of the inorganic external additive. Therefore, the release of the inorganic external additive from the toner based particles can be more reliably suppressed. Thus, the toner according to one embodiment can more reliably exhibit the function of the inorganic external additive, and can enhance low-temperature fixability and heat-resistant storage stability.

<Developer>

The developer of one embodiment includes the toner of one embodiment and may include other components, such as carriers, which are selected as appropriate, as needed. As a result, high-quality images with excellent transferability, charge characteristics, and the like can be stably formed.

The developer may be a single-component developer or a two-component developer. In the case where the developer is used for a high-speed printer, or the like, in response to the recent enhancement in the information processing speed, from a point of enhancing the service life of the printer, the two-component developer is preferably used.

In the case where the above-described developer is used as single component developer, even when the toner is consumed and supplied repeatedly, the toner exhibits little variation in the particle size, little filming on the developing roller, and little adhesion to a member such as a blade that forms a thin layer of the toner. Thus, after the toner is stirred for a long time in the developing device, the developer can obtain excellent and stable developability and images.

If the developer of one embodiment is used in the two-component developer, it can be mixed with a carrier as a developer. If the toner is used in the two-component developer, even when the toner is consumed and supplied for a long time, variation in the particle size of the toner is small; and even when the toner is stirred for a long time in the developing device, excellent and stable developing property and image are obtained.

The content of the carrier in the two-component developer can be appropriately determined according to a purpose. The content preferably is within a range from 90 parts by mass to 98 parts by mass, and more preferably is within a range from 93 parts by mass to 97 parts by mass relative to 100 parts by mass of the two-component developer.

The developer according to the embodiment of the present application can preferably be used to form images using the conventional electrophotography, such as a magnetic monocomponent development method, a nonmagnetic monocomponent development method, or a two-component development method.

[Carriers]

The carrier is not particularly limited and can be appropriately selected according to the purpose, but the carrier preferably has a core material and a resin layer (coating layer) covering the core material.

(Core Materials)

The material of core is not particularly limited, and can be appropriately selected according to a purpose. Suitable materials of the core may include, for example, manganese-strontium based materials with a magnetization that is within a range from 50 emu/g to 90 emu/g and manganese-magnesium based materials with magnetization that is within a range from 50 emu/g to 90 emu/g. Moreover, to secure an image density, iron powder with a magnetization of 100 emu/g or greater, and a high magnetization material such as magnetite with magnetization that is within a range from 75 emu/g to 120 emu/g are preferably used. Moreover, a low magnetization material such as copper-zinc based material with magnetization that is within a range from 30 emu/g to 80 emu/g is preferably used because an impact of the developer held in the form of a brush against the photoconductor can be reduced, and it is advantageous for improving the image quality. The above-described materials may be used singly, or a combination of two or more materials may be used.

The volume average particle diameter of the core is not particularly limited, and can be appropriately determined according to a purpose. The volume average particle diameter preferably is in a range from 10 um to 150 um and more preferably in a range from 40 um to 100 um. When the volume average particle diameter is 10 um or more, it is possible to effectively suppress problems such as increases in the amount of fine powders in the carrier, decreases in the magnetization per individual particle, and scattering of the carriers. Meanwhile, when the volume average particle diameter is 150 um or less, it is possible to effectively suppress problems such as decreases in the specific surface area, occurrence of scattering of the toner, and poor reproduction of solid image portion in a full-color image including a lot of solid image portions.

(Resin Layer)

The materials of the resin layer are not particularly limited and can be selected appropriately from among known resins according to the purpose. Examples of the materials include amino-based resins, polyvinyl-based resins, polystyrene-based resins, polyhalogenated olefins, polyester-based resins, polycarbonate-based resins, polyethylene, polyvinyl fluoride, polyvinylidene fluoride, polytrifluoroethylene, polyhexafluoropropylene, copolymers of vinylidene fluoride and acrylic monomers, copolymers of vinylidene fluoride and vinyl fluoride, fluoroterpolymers such as copolymers of tetrafluoroethylene, vinylidene fluoride, and monomers without fluoro groups; silicone resins; and the like. These may be used alone or in combination of two or more.

The amino-based resins are not particularly limited and can be selected appropriately according to the purpose, for example, urea-formaldehyde resin, melamine resin, benzoguanamine resin, urea resin, polyamide resin, epoxy resin, and the like.

The polyvinyl resins are not particularly limited and can be selected appropriately according to the purpose, for example, acrylic resin, polymethyl methacrylate, polyacrylonitrile, polyvinyl acetate, polyvinyl alcohol, polyvinyl butyral, and the like.

The polystyrene-based resins are not particularly limited and can be selected as appropriate according to the purpose, such as polystyrene, styrene-acrylic copolymers, and the like.

The polyhalogenated olefins are not particularly limited and can be selected as appropriate according to the purpose, for example, polyvinyl chloride and the like.

The polyester-based resins are not particularly limited and can be selected appropriately according to the purpose, for example, polyethylene terephthalate, polybutylene terephthalate, and the like.

The resin layer may contain conductive powder and the like, if necessary. The conductive powder is not particularly limited and can be selected appropriately according to the purpose, for example, metal powder, carbon black, titanium oxide, tin oxide, zinc oxide, and the like. The average particle size of the conductive powder is preferably 1 um or less. If the average particle size is 1 um or less, the electrical resistance can be controlled.

The resin layer can be formed by preparing a coating solution by dissolving silicone resin or the like in a solvent, applying the coating solution to the surface of the core material using a known coating method, drying the coating solution, and then baking the core material.

The application method is not particularly limited and can be selected as appropriate according to the purpose. Examples of the application methods include immersion application method, spray method, brush application method, and the like.

The solvents are not particularly limited and can be selected as appropriate according to the purpose, for example, toluene, xylene, methyl ethyl ketone, methyl isobutyl ketone, butyl acetate cellosolve, and the like.

The baking process may be an external heating method or an internal heating method. Examples of the methods include a method using a fixed electric furnace, a fluid electric furnace, a rotary electric furnace, a burner furnace, and the like, or a method of using microwaves and the like.

The content of the resin layer in the carrier is not particularly limited and can be selected as appropriate according to the purpose. The content is preferably in a range grom 0.01% by mass to 5.0% by mass. If the content of the resin layer is 0.01% by mass or more, a uniform resin layer can be formed on the surface of the core material. If the content is 5.0% by mass or less, the thickness of the resin layer is suppressed, so that fusion between carriers is suppressed and uniformity of carriers can be maintained.

<Developer Housing Container>

A developer housing container according to one embodiment houses the developer of one embodiment. The developer housing container is not particularly limited, and known containers can be appropriately selected for the intended purpose. The developer housing container has a container body and a cap.

In addition, although the size, shape, structure, material, and the like of the container body are not particularly limited, the shape is preferably cylindrical and the like. The shape is particularly preferable that the inner circumference has spiral-shaped irregularities, and that by rotating it, the content, developer, can migrate to the outlet side, and that some or all of the spiral-shaped irregularities have a bellows function. Furthermore, the material is not particularly limited, but the material is preferable to have good dimensional accuracy, for example, resin materials such as polyester resin, polyethylene resin, polypropylene resin, polystyrene resin, polyvinyl chloride resin, polyacrylic acid, polycarbonate resin, ABS resin, polyacetal resin, and the like.

The developer housing container is easy to house, transport, and so on, and is excellent in handling. Therefore, the developer housing container can be detachably attached to an image forming apparatus, process cartridge, and the like, described later, and used for replenishing the developer.

<Toner Housing Unit>

A toner housing unit according to the embodiment of the present application can store the toner of the embodiment of the present application.

The toner housing unit according to the embodiment of the present application refers to a unit provided with function of housing a toner. Examples of the toner housing unit include, for example, a toner housing container, a developing device, and a process cartridge.

The toner housing container refers to a container that houses a toner.

The developing device refers to a unit that stores a toner and has a developing device.

A process cartridge is one that includes at least an electrostatic latent image bearer (also called an image bearer) and a developing device that are integrated, stores a toner, and is detachably attached to the image forming apparatus. The process cartridge may further be equipped with at least one selected from a charging part, an exposure part, a cleaning part, and the like.

The toner housing unit according to one embodiment stores the toner according to one embodiment, and the toner according to one embodiment has features that enable it to provide high-definition and high-quality images over a long period of time, which are excellent in high-temperature offset resistance, charging stability, stress resistance, and dirt resistance. By mounting the toner housing unit according to one embodiment on an image forming apparatus and using the characteristics of the toner according to one embodiment to form an image, a high-quality and high-definition image with long-term image stability can be formed.

<Image Forming Aapparatus>

The image forming apparatus according to one embodiment has an electrostatic latent image bearer, an electrostatic latent image forming part that forms an electrostatic latent image on the electrostatic latent image bearer, and a developing part that develops the electrostatic latent image formed on the electrostatic latent image bearer using the toner to form a toner image, and can have other configurations as needed.

The image forming apparatus according to one embodiment is more preferably equipped with a transferring part for transferring the toner image to a recording medium and a fixing part for fixing the transferred image on the surface of the recording medium, in addition to the electrostatic latent image bearer, the electrostatic latent image forming part, and the developing part described above.

The toner according to one embodiment is used in the developing part. Preferably, a toner image may be formed by using the developer containing the toner of one embodiment and, if necessary, other components such as carriers and the like.

(Electrostatic Latent Image Bearer)

A material, a shape, a structure, a size, and the like of the electrostatic latent image bearer (sometimes referred to as "electrophotographic photoconductor" or "photoconductor") are not particularly limited, and can be appropriately selected from the conventional electrostatic latent image bearers. The materials of the electrostatic latent image bearer include, for example, inorganic photoconductors such as amorphous silicon, selenium, an and the like; organic photoconductors (OPC) such as polysilane, phthalo polymethine, and the like. Among them, amorphous silicon is preferably used from the viewpoint of longevity, and organic photoconductor (OPC) is preferably used from the viewpoint of obtaining more high-resolution images.

As the amorphous silicon photoconductor, for example, a photoconductor having a photoconductive layer made of a-Si can be used by heating a support to 50 to 400°C and forming a film on the support by vacuum deposition method, sputtering method, ion plating method, thermal Chemical vapor deposition (CVD) method, photo CVD method, plasma CVD method, or the like. Among these, the plasma CVD method, in which source gas is decomposed by direct current or radio frequency or microwave glow discharge to form a deposited a-Si film on the support, is preferably used.

The shape of the electrostatic latent image bearer is not particularly limited and can be selected appropriately according to the purpose, but a cylindrical shape is preferably used. The outer diameter of the cylindrical electrostatic latent image bearer is not particularly limited and can be selected appropriately according to the purpose. The outer diameter of the cylindrical electrostatic latent image bearer is preferably in a range from 3 mm to 100 mm, more preferably in a range from 5 mm to 50 mm, and particularly preferably 10 mm to 30 mm.

The linear velocity of the electrostatic latent image bearer is preferably 300 mm/s or more.

(Electrostatic Latent Image Forming Part)

The electrostatic latent image forming part is not particularly limited as long as the electrostatic latent image forming part is a device for forming an electrostatic latent image on the electrostatic latent image bearer, and can be selected appropriately according to the purpose. The electrostatic latent image forming part is provided with, for example, a charging member (charger) that uniformly charges the surface of the electrostatic latent image bearer and an exposure member (exposure device) that exposes the surface of the electrostatic latent image bearer in an image-like manner.

Chargers are not particularly limited and can be appropriately selected according to the purpose. Examples of chargers include contact chargers equipped with conductive or semiconducting rolls, brushes, films, rubber blades, and the like; and non-contact chargers such as corotrons, scorotrons, and the like using corona discharge.

The shape of the chargers can be any shape such as a magnetic brush, a fur brush, and the like, in addition to a roller and can be selected according to the specifications and shape of the image forming apparatus.

The charger is preferably arranged in contact or non-contact with the electrostatic latent image bearer, and charges the surface of the electrostatic latent image bearer by applying a superimposed direct current and alternating current voltage. The charger is preferably a charged roller arranged in close proximity to the electrostatic latent image bearer in a non-contact manner via a gap tape and charges the surface of the electrostatic latent image bearer by superimposing a direct current and an alternating current voltage on the charged roller.

Although the charger is not limited to a contact type charger. The charger is preferably a contact type charger that includes a charged member from a viewpoint of obtaining an image forming apparatus with reduced ozone generated from the charger.

The exposure device is not particularly limited as long as the exposure device can expose with an image to be formed onto the surface of the electrostatic latent image bearer charged by the charger, and can be appropriately selected according to a purpose. The exposure device includes, for example, various types of exposure devices such as a copying optical system, a rod lens array system, a laser optical system, a liquid crystal shutter optical system, and the like.

The light source used for the exposure device is not particularly limited and can be selected appropriately according to the purpose, for example, fluorescent lamps, tungsten lamps, halogen lamps, mercury lamps, sodium lamps, light emitting diodes (LED), semiconductor lasers (LD), electroluminescence (EL), and other luminous materials in general.

In addition, various filters such as a sharp cut filter, a bandpass filter, a near-infrared cut filter, a dichroic filter, an interference filter, and a light balancing filter, and the like can be used to emit only light in the desired wavelength range.

The exposure device may employ a light backplane system that exposes the image from the backside of the electrostatic latent image bearer.

(Developing Part)

The developing part is not particularly limited and can be selected appropriately according to the purpose, if the visible image can be formed by developing the electrostatic latent image formed on the electrostatic latent image bearer. For example, the developing part can suitably be equipped with a developing device that contains toner and can apply toner to the electrostatic latent image in a contact or non-contact manner, and the developing device with a toner-containing container is preferably used.

The developing device be a monochromatic developing device or a multicolor developing device.

As the developing device, for example, a developing device having a stirrer for charging toner by friction stirring and a magnetic field generating part fixed inside the developing device, and a developer bearer (for example, a magnet roller) capable of being rotated by carrying a developer containing toner on the surface is suitably used.

(Transferring Part)

The transferring part is preferably configured to include a primary transferring part that transfers a visible image onto an intermediate transfer body to form a composite transfer image and a secondary transferring part that transfers the composite transfer image onto a recording medium. The intermediate transfer body is not particularly limited and can be selected from among known transfer bodies according to the purpose, and, for example, a transfer belt is preferably used.

The transferring part (primary transferring part and secondary transferring part) preferably has at least a transferring device that peels and charges the visible image formed on the electrostatic latent image bearer (photoconductor) to the recording medium side. The transferring part may be one or two or more.

Examples of transferring devices include corona transfer devices by corona discharge, transfer belts, transfer rollers, pressure transfer rollers, adhesive transfer devices, and the like.

The recording medium is typically plain paper. The recording medium is not particularly limited as long as the recording medium is capable of transferring an unfixed image after developing an image, and any of the known recording media (recording paper) can be selected according to the purpose. PET bases for OHP and other materials can also be used.

(Fixing Part)

The fixing part is not particularly limited, and can be appropriately selected according to a purpose. The fixing part is preferably a conventional heating and pressurizing part. Examples of the heating and pressurizing parts include a combination of a heating roller and a pressurizing roller, a combination of a heating roller, a pressuring roller, an endless belt, and the like.

The fixing part preferably has a heating body that includes a heating element, a film that contacts with the heating body, and a pressurizing member that heat-pressurizes with the heating body through the film. The fixing part is a heating and pressurizing part that can be heat-fixed by passing a recording medium in which an unfixed image is formed between the film and the pressurizing member.

Heating in the heating and pressurizing part is preferably from 80 to 200°C, in general.

The surface pressure in the heating and pressurizing part is not particularly limited and can be appropriately selected according to the purpose. The surface pressure is preferably in a range from 10 N/cm$^2$ to 80 N/cm$^2$.

In the present embodiment, for example, a known optical fixing device may be used along with or instead of the fixing part according to the purpose.

(Others)

The image forming apparatus according to one embodiment may be provided with other parts, such as a static eliminating part, a recycling part, a controlling part, and the like.

((Static Eliminating Part))

The static eliminating part is not particularly limited, and only if a static elimination bias can be applied to the electrostatic latent image bearer, the static eliminating part can be suitably selected from known static eliminating devices, and for example, a static elimination lamp and the like can be suitably used.

((Cleaning Part))

The cleaning part can remove the toner remaining on the electrostatic latent image bearer, and the cleaning part can be selected appropriately from among known cleaners. Examples of the cleaning parts include a magnetic brush cleaner, an electrostatic brush cleaner, a magnetic roller cleaner, a blade cleaner, a brush cleaner, a web cleaner, and the like.

The image forming apparatus according to one embodiment can improve cleanability by having the cleaning part. That is, by controlling the adhesive force between the toners, the fluidity of the toner is controlled and the cleanability can be improved. In addition, by controlling the characteristics of the toner after deterioration, excellent cleaning quality can be maintained even under harsh conditions such as longer service life and high temperature and humidity. Furthermore, the external additive can be sufficiently freed from the toner on the photoconductor. Therefore, high cleanability can be achieved by forming a deposit layer (dam layer) of the external additive at the cleaning blade nip part.

((Recycling Part))

The recycling part is not particularly limited, but includes known transport devices.

((Controlling Part))

The controlling part can control the movement of the above parts. As for the controlling part, if the movement of the above parts can be controlled, the controlling part is not particularly limited and can be selected appropriately according to the purpose. For example, controlling devices such as sequencers and computers can be used.

The image forming apparatus of one embodiment can form images using the toner of one embodiment. Therefore, the image forming apparatus can stably provide excellent transferability, chargability, and high-quality images.

<Method of Forming Images>

The method of forming images according to one embodiment includes an electrostatic latent image forming step of forming an electrostatic latent image on an electrostatic latent image bearer and a developing step of developing the electrostatic latent image using the toner to form a toner image, and may include other steps as needed. The method of forming images can be suitably performed by the image forming apparatus, the electrostatic latent image forming step can be suitably performed by the electrostatic latent image forming part, the developing step can be suitably performed by the developing part, and the other steps can be suitably performed by the other parts.

In addition, the method of forming images according to one embodiment more preferably includes a transfer step of transferring the toner image onto a recording medium and a fixing step of fixing the transferred image onto the surface of the recording medium, in addition to the above electrostatic latent image forming step and developing step.

In the developing step, the toner according to one embodiment is used. Preferably, a toner image may be formed by using a developer containing the toner of one embodiment and, if necessary, other components such as carriers.

The electrostatic latent image forming step is a step of forming an electrostatic latent image on an electrostatic latent image bearer and includes a charging step of charging the surface of the electrostatic latent image bearer and an exposure step of exposing the surface of the charged electrostatic latent image bearer to form an electrostatic latent image. Charging can be performed, for example, by applying a voltage to the surface of the electrostatic latent image bearer using a charger. Exposure can be performed, for example, by image-like exposure of the surface of the electrostatic latent image bearer using the exposure device. The formation of the electrostatic latent image can be performed by, for example, uniformly charging the surface of the electrostatic latent image bearer, followed by exposing as image-like exposure by the electrostatic latent image forming part.

The developing step is a step of forming a visible image by sequentially developing an electrostatic latent image with a multi-color toner. The formation of the visible image can be carried out, for example, by developing the electrostatic latent image using the toner by the developing device.

In the developing device, for example, the toner and the carrier are mixed and stirred, and the toner is charged by friction at that time, and is held on the surface of the rotating magnet roller in the form of brush. The magnet roller is located near the electrostatic latent image bearer (photoconductor), a part of the toner constituting the magnetic brush formed on the surface of the magnet roller moves to the surface of the electrostatic latent image bearer (photoconductor) by the electric attraction force. As a result, the electrostatic latent image is developed by the toner to form a visible image by the toner on the surface of the electrostatic latent image bearer (photoconductor).

The transfer step is the step of transferring a visible image onto a recording medium. The transfer step is preferably performed using an intermediate transfer body, and after primary transfer of the visible image onto the intermediate transfer body, a secondary transfer of the visible image onto the recording medium is performed.

The transfer step is more preferably performed using two or more toners, preferably full color toners, and includes a first transfer step in which the visible image is transferred onto the intermediate transfer body to form a composite transfer image, and a second transfer step in which the composite transfer image is transferred onto the recording medium. If the image to be secondarily transferred onto the recording medium is a color image consisting of toners of multiple colors, the transfer step may use the intermediate transfer medium to form an image on the intermediate transfer medium by sequentially overlaying toners of each color on the intermediate transfer medium, and then transfer the image on the intermediate transfer medium by the intermediate transfer medium to the recording medium in a batch for secondary transfer.

Transfer can be performed, for example, by charging the electrostatic latent image bearer (photoconductor) with a transfer charger for the visible image by the transferring part.

The fixing step is a step of fixing the visible image transferred onto the recording medium by using a fixing device, and may be performed for each color developer every time the image is transferred onto the recording medium, or simultaneously for each color developer in a laminated state.

The method of forming images according to one embodiment may further include other steps selected as appropriate, such as a static elimination step, a cleaning step, a recycling step, and the like.

The static elimination step is a step of applying a static elimination bias to the electrostatic latent image bearer to eliminate static electricity, and can be preferably performed by the static eliminating part.

The cleaning step is a step of removing the toner remaining on the electrostatic latent image bearer, and can be performed more favorably by the cleaning part.

The recycling step is a step of having the developing part recycle the toner removed by the cleaning step, and can be performed more favorably by the recycling part.

The method of forming images according to one embodiment can perform image formation using the toner according to one embodiment. Therefore, the method of forming image can stably provide excellent transferability, chargability, and high-quality images.

[One Embodiment of Image Forming Apparatus]

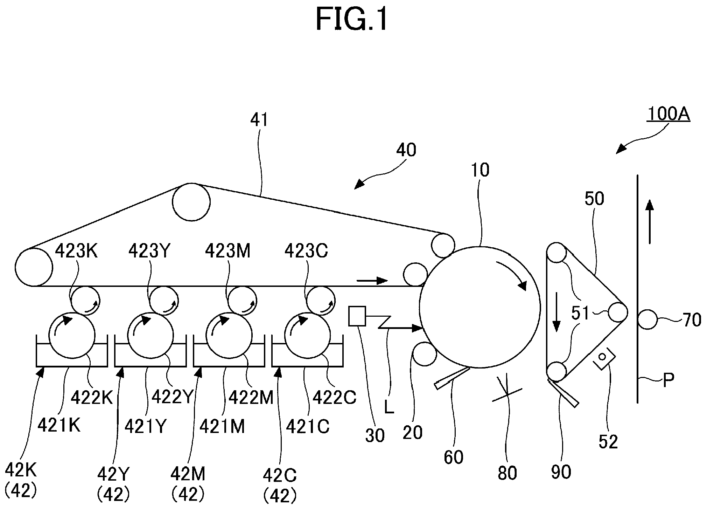

Next, one embodiment of the image forming apparatus according to one embodiment will be described with reference to FIG. 1. FIG. 1 is a schematic configuration diagram illustrating an example of an image forming apparatus according to an embodiment. As illustrated in FIG. 1, an image forming apparatus 100A is equipped with a photoconductor drum 10 which is an electrostatic latent image bearer, a charged roller 20 which is a charging part, an exposure device 30 which is an exposing part, a developing device 40 which is a developing part, an intermediate transfer body (intermediate transfer belt) 50, a cleaning device 60 which is a cleaning part, a transfer roller 70 which is a transferring part, a static elimination lamp 80 which is a static eliminating part, and an intermediate transfer body cleaning device 90.

The intermediate transfer body 50 is an endless belt stretched by three rollers 51 placed inside and designed to be movable in the direction, shown by arrow, by three rollers 51. Some of the three rollers 51 also function as transfer bias rollers capable of applying a predetermined transfer bias (primary transfer bias) to the intermediate transfer body 50. In the vicinity of the intermediate transfer body 50, the intermediate transfer body cleaning device 90 is placed. In the vicinity of the intermediate transfer body 50, the transfer roller 70 is placed opposite to the intermediate transfer body 50, and the transfer bias (secondary transfer bias) can be applied to transfer (secondary transfer) the developed image (toner image) to transfer (secondary transfer) a transfer paper P as a recording medium. Around the intermediate transfer body 50, a corona charger 52 for applying an electric charge to the toner image on the intermediate transfer body 50 is placed between a contact part between the photoconductor drum 10 and the intermediate transfer body 50 and the contact part between the intermediate transfer body 50 and the transfer paper P in the rotational direction of the intermediate transfer body 50.

The developing device 40 is configured by a developing belt 41 as a developer bearer and a developing unit 42 attached to the periphery of the developing belt 41.

The developing belt 41 is an endless belt stretched by a plurality of belt rollers and can be moved in the direction shown by the arrow in the figure. Furthermore, a part of the developing belt 41 is in contact with the photoconductor drum 10.

The developing unit 42 is configured by a black (Bk) developing unit 42K, a yellow (Y) developing unit 42Y, a magenta (M) developing unit 42M, and a cyan (C) developing unit 42C.

The black developing unit 42K includes a developer housing part 421K, a developer supply roller 422K, and a developing roller (developer bearer) 423K. The yellow developing unit 42Y includes a developer housing part 421Y, a developer supply roller 422Y, and a developing roller 423Y. The magenta developing unit 42M includes a developer housing part 421M, a developer supply roller 422M, and a developing roller 423M. The cyan developing unit 42C includes a developer housing part 421C, a developer supply roller 422C, and a developing roller 423C.

Next, a method of forming an image using the image forming apparatus 100A will be described. First, the surface of the photoconductor drum 10 is uniformly charged using the charged roller 20, and then expose an exposure light L to the photoreceptor drum 10 using the exposure device 30 to form an electrostatic latent image. Then, the electrostatic latent image formed on the photoconductor drum 10 is developed with the toner supplied from the developing device 40 to form a toner image. Furthermore, the toner image formed on the photoconductor drum 10 is transferred (primary transfer) onto the intermediate transfer body 50 by the transfer bias applied from the roller 51, and then transferred (secondary transfer) onto the transfer paper P supplied by a paper feeding part (not shown) by the transfer bias applied from the transfer roller 70. On the other hand, the photoconductor drum 10, on which the toner image is transferred to the intermediate transfer body 50, is eliminated by the static elimination lamp 80 after the toner remaining on the surface is removed by the cleaning device 60. The residual toner on the intermediate transfer body 50 after image transfer is removed by the intermediate transfer body cleaning device 90.

After the transfer step is completed, the transfer paper P is transported to a fixing unit, in which the toner image transferred above is fixed on the transfer paper P.

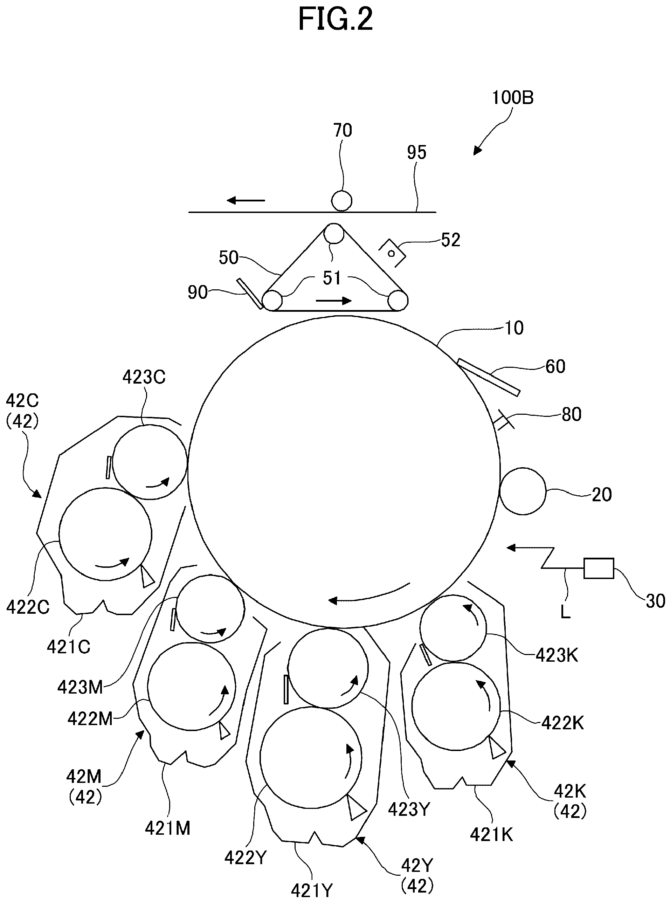

FIG. 2 is a schematic configuration diagram illustrating another example of an image forming apparatus according to one embodiment. As illustrated in FIG. 2, an image forming apparatus 100B has the same configuration as the image forming apparatus 100A in the image forming apparatus 100A illustrated in FIG. 1 except that the developing unit 42 (Black developing unit 42K, yellow developing unit 42Y, magenta developing unit 42M, and cyan developing unit 42C) is arranged directly facing each other around the photoconductor drum 10 without providing the developing belt 41.

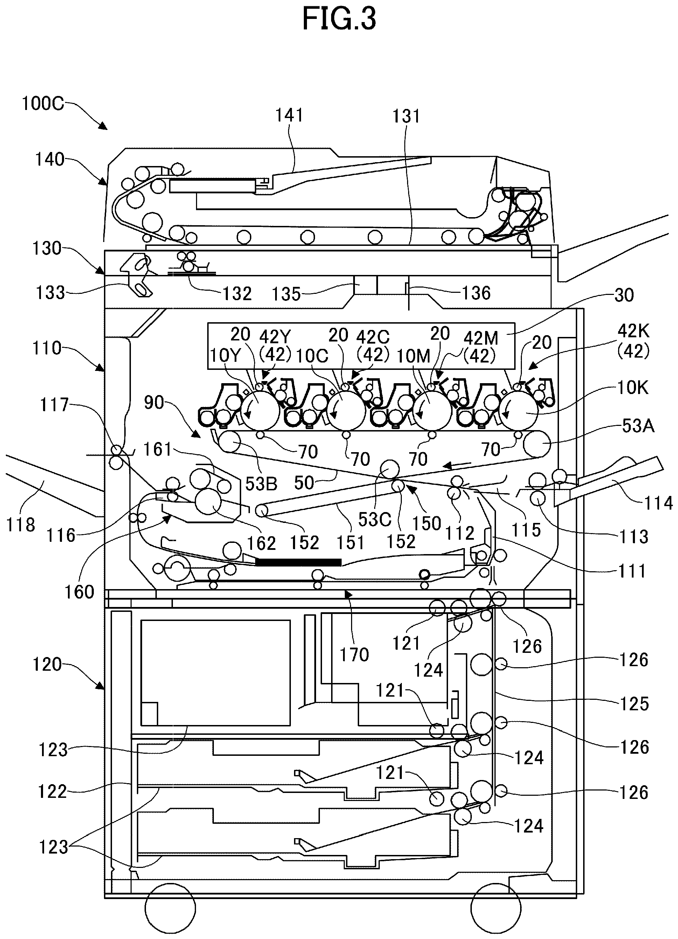

FIG. 3 is a schematic configuration diagram illustrating another example of an image forming apparatus according to one embodiment. As illustrated in FIG. 3, the image forming apparatus 100C is a tandem type color image forming apparatus and is equipped with a copying machine body 110, a paper feeding table 120, a scanner 130, an automatic document feeder (ADF) 140, a secondary transfer device 150, a fixing device 160 which is a fixing part, and a sheet reversing device 170.

An endless belt-shaped intermediate transfer body 50 is provided at the center of the copying machine body 110. The intermediate transfer body 50 is an endless belt stretched over three rollers 53A, 53B, and 53C and can move in the direction shown by the arrow in FIG. 3. In the vicinity of the roller 53B, the intermediate transfer body cleaning device 90 is placed to remove toner remaining on the intermediate transfer body 50 on which the toner image has been transferred onto the recording paper. The developing unit 42 (Yellow (Y) developing unit 42Y, cyan (C) developing unit 42C, magenta (M) developing unit 42M, and black (Bk) developing unit 42K), which is a tandem type developing device, is placed opposite to and opposed with the intermediate transfer body 50 stretched by the rollers 53A and 53B along the conveyance direction.

The exposure device 30 is placed in the vicinity of the developing unit 42. Further, the secondary transfer device 150 is placed on the side opposite to the side where the developing unit 42 of the intermediate transfer body 50 is placed. The secondary transfer device 150 is equipped with a secondary transfer belt 151. The secondary transfer belt 151 is an endless belt stretched over a pair of rollers 152, and the recording paper conveyed on the secondary transfer belt 151 and the intermediate transfer body 50 can contact between the roller 53C and the roller 152.

In addition, the fixing device 160 is placed in the vicinity of the secondary transfer belt 151. The fixing device 160 is equipped with a fixing belt 161, which is an endless belt stretched over a pair of rollers, and a pressure roller 162, which is placed and pressed against the fixing belt 161.

In the vicinity of the secondary transfer belt 151 and the fixing device 160, a sheet reversing device 170 is placed to reverse the recording paper when an image is formed on both sides of the recording paper.

Next, a method of forming a full-color image using an image forming apparatus 100C will be described. First, a color document is set on a document stand 141 of the automatic document feeder (ADF) 140, or, the ADF 140 is opened, the color document is set on an exposure glass 131 of the scanner 130, and the ADF 140 is closed.

In a case where a color document is set in the automatic document feeder 140 and a start switch (not shown) is pressed, and the color document is transported and moved to the exposure glass 131 and moved onto the exposure glass. Then, the scanner 130 is driven, and a first running body 132 and a second running body 133 equipped with light sources are driven. On the other hand, when a document is set on the exposure glass 131, the scanner 130 is driven to run the first running body 132 and the second running body 133 equipped with the light sources. At this time, the color document (color image) is read and black, yellow, magenta, and cyan image information is obtained by reflecting the light from the document surface emitted from the first running body 132 by the mirror on the second running body 133 and then receiving the light at a reading sensor 136 through an imaging lens 135.

The image information of each color is transmitted to each color developing unit (yellow developing unit 42Y, cyan developing unit 42C, magenta developing unit 42M, and black developing unit 42K) to form a toner image of each color.

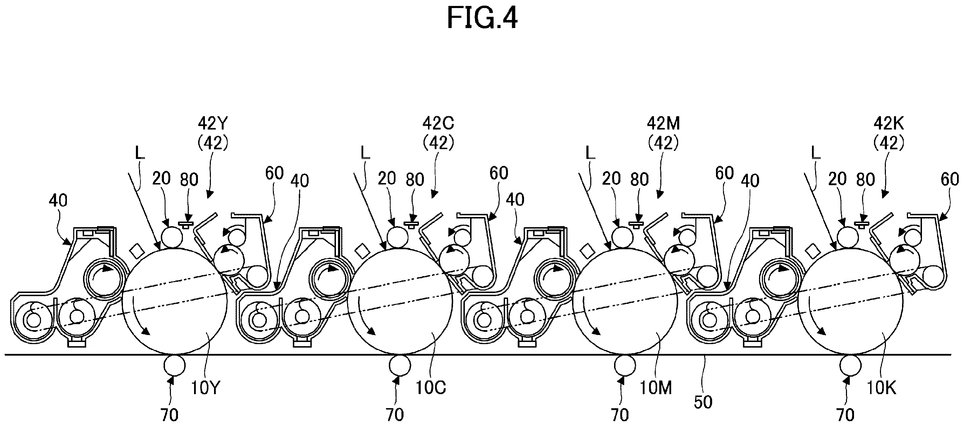

FIG. 4 is a partially enlarged view of the image forming apparatus of FIG. 3. As illustrated in FIG. 4, each developing unit (yellow developing unit 42Y, cyan developing unit 42C, magenta developing unit 42M, and black developing unit 42K) is equipped with a photoconductor drum 10 (photoconductor drum for black 10K, photoconductor drum for yellow 10Y, photoconductor drum for magenta 10M, and photoconductor drum for cyan 10C); an charged roller 20 which is a charging part for uniformly charging the electrostatic latent image bearer 10; the exposure device 30 which exposes an exposure light L on the photoconductor drum 10 based on image information of each color and forms an electrostatic latent image of each color on the photoconductor drum 10; the developing device 40 which is a developing part for developing an electrostatic latent image with a developer of each color and forming a toner image of each color; a transfer charger 62 for transferring a toner image onto the intermediate transfer body 50; the cleaning device 60; and the static elimination lamp 80.

Toner images of each color formed in each color developing unit (yellow developing unit 42Y, cyan developing unit 42C, magenta developing unit 42M, and black developing unit 42K) are sequentially transferred (primary transfer) onto the intermediate transfer body 50 that is stretched and moved by the rollers 53A, 53B, and 53C. Then, the toner images of each color are superimposed on the intermediate transfer body 50 to form a composite color image (color transferred image).

On the other hand, in the paper feeding table 120, one of the paper feeding rollers 121 is selectively rotated to feed the recording paper from one of the paper feeding cassettes 123 provided in a paper bank 122 in multiple stages. The recording paper is separated one by one by separation rollers 124 and delivered to a paper feeding path 125, conveyed by conveyance rollers 126, guided to a paper feeding path 111 in a copying machine body 110, and stopped by abutting against a pair of resist roller 112. Alternatively, a manual feed roller 113 is rotated to feed out the recording paper on a manual paper feeding tray 114, the paper is separated one by one by the manual feed roller 113, guided to a manual feed path 115, and stopped by abutting against the resist roller 112.

The resist roller 112 is generally used grounded, but may be used with a bias applied to remove paper dust from the recording paper.

Then, the resist roller 112 is rotated in timing with the composite color image (color transferred image) formed on the intermediate transfer body 50, the recording paper is sent out between the intermediate transfer body 50 and the secondary transfer belt 151, and the composite color image (color transferred image) is transferred (secondary transfer) onto the recording paper. Toner remaining on the intermediate transfer body 50 onto which the composite color image (color transferred image) has been transferred is removed by the intermediate transfer body cleaning device 90.

After the recording paper onto which the composite color image (color transferred image) has been transferred is conveyed by the secondary transfer belt 151, the composite color image is fixed on the recording paper by the fixing device 160.

Then, the transfer path of the recording paper is switched by a switching pawl 116, and the recording paper is discharged onto a paper discharge tray 118 by a discharge roller 117. Alternatively, the transfer path of the recording paper is switched by the switching pawl 116, inverted by the sheet reversing device 170, guided again by the secondary transfer belt 151, an image is formed on the back of the recording paper in the similar manner, and then the recording paper is discharged by the discharge roller 117 onto the paper discharge tray 118.

<Process Cartridge>

The process cartridge according to one embodiment is formed detachably attached to various image forming apparatuses and has an electrostatic latent image bearer that bears an electrostatic latent image and a developing part that develops the electrostatic latent image beared on the electrostatic latent image bearer with the developer according to one embodiment to form a toner image, and may have other configurations as needed.

Since the electrostatic latent image bearer is similar to the electrostatic latent image bearer of the image forming apparatus described above, details are omitted.

The developing part includes a developer housing container for storing the developer according to one embodiment and a developer bearer for bearing and transporting the developer stored in the developer housing container. The developing part may further have a regulating member or the like to regulate the thickness of the developer to be carried.

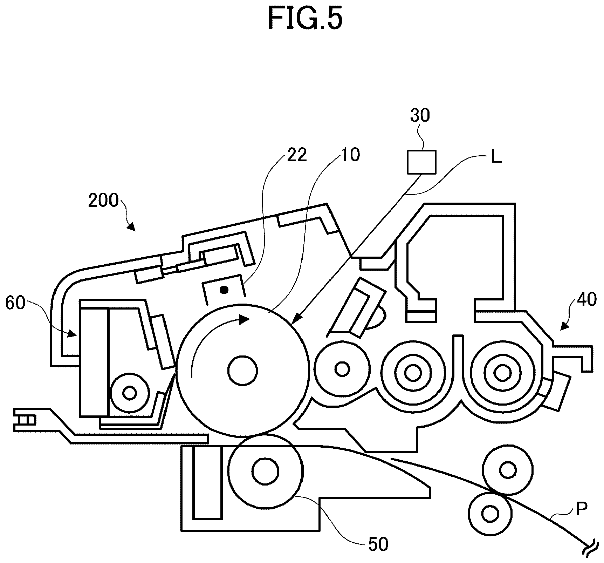

FIG. 5 illustrates an example of the process cartridge according to one embodiment. As illustrated in FIG. 5, an image forming apparatus process cartridge 200 includes the photoconductor drum 10, a corona charger 22 which is a charging part, the developing device 40, the cleaning device 60, and the transfer roller 70. In the figure, P indicates the transfer paper and L indicates the exposure light.

EXAMPLES

Hereinafter, Examples and Cmparative Examples are indicated to further illustrate the embodiments, but the embodiments are not limited by these Examples and Comparative Examples.

-Manufacture of Toner-

(Manufacture Example of of Crystalline Polyester Resin)

<Synthesis of Crystalline Polyester Resin 1>

Sebacic acid and 1,6-hexanediol were charged into a reaction vessel set with a nitrogen introduction tube, a dehydration tube, an agitator, and a thermocouple. At this time, the molar ratio of hydroxyl groups to carboxyl groups was set at 0.9, and 500 ppm of titanium tetraisopropoxide was added to all monomers. Then, the reaction was carried out at 180°C for 10 hours and then the temperature was raised to 200°C for 3 hours. Further, the reaction was carried out under reduced pressure of 8.3 kPa for 2 hours to obtain a crystalline polyester resin 1.

The crystalline polyester resin 1 had a melting point of 67°C and a weight-average molecular weight (Mw) of 25,000.

(Manufacture Example of of Amorphous Polyester Resin)

<Synthesis of Amorphous Polyester Resin 1>

1427.5 g of bisphenol A propylene oxide 2 mol adduct, 20.2 g of trimethylolpropane, 512.7 g of terephthalic acid, and 119.9 g of adipic acid were placed in a 5-L four-neck flask equipped with a nitrogen introduction tube, a dehydration tube, an agitator, and a thermocouple, and the mixture was reacted for 10 hours at 230°C under normal pressure, and then the mixture was reacted for 5 hours under reduced pressure of 10 to 15 mmHg, and then 41.0 g of trimellitic anhydride was placed in the reaction vessel (four-neck flask), and the mixture was reacted at 180°C under normal pressure for 3 hours to obtain an amorphous polyester resin 1.

The amorphous polyester resin 1 had a weight-average molecular weight (Mw) of 10,000, a number-average molecular weight (Mn) of 2,900, a glass transition temperature (Tg) of 57.5°C, and an acid value of 20 mgKOH/g.

(Manufacture Example of of Crystalline Polyester Resin Dispersion Liquid)

<Preparation of Crystalline Polyester Resin Dispersion Liquid 1>

In a 2L metal container, 100 parts by mass of the crystalline polyester resin 1 and 200 parts by mass of ethyl acetate were dissolved by heating at 75°C, and then rapidly cooled at a rate of 27°C/min in an ice water bath. 500 mL of glass beads (3 mmφ) was added to the mixture, and the mixture was ground for 10 hours in a batch type Sandmill (manufactured by Kanpe Hapio Co., Ltd) to obtain a crystalline polyester resin dispersion liquid 1.

(Preparation of Organic Fine Particle Dispersion Liquid)

<Manufacture of Aqueous Dispersion Liquid (W0-1) of Fine Resin Particles (A)>

3710 parts by mass of water and 200 parts by mass of polyoxyethylene-1-(allyloxymethyl) alkyl ether ammonium sulfate (Aqualone KH-1025, manufactured by Daiichi Kogyo Pharmaceutical Co., Ltd.) were charged into a reaction vessel equipped with an agitator, a heating and cooling device, and a thermometer, and the mixture was stirred at 200 revolutions per minute to homogenize the mixture. The homogenized mixture was heated to raise the internal temperature of the system to 75°C, 90 parts by mass of 10% ammonium persulfate aqueous solution was added, and then a mixture consisting of 450 parts by mass of styrene, 250 parts by mass of butyl acrylate, and 300 parts by mass of methacrylic acid was added dropwise over 4 hours.

After that, the fine particle dispersion liquid (W0-1) containing the above monomer and resin (a1-1) which is a polymer copolymerized with polyoxyethylene-1-(allyloxymethyl) alkyl ether ammonium sulfate was obtained by aging at 75°C for 4 hours.

The volume average particle size of the fine particles in the fine particle dispersion liquid (W0-1) was 15 nm as measured by dynamic light scattering (Light scattering electrophoresis equipment: ELS-8000, manufactured by Otsuka Electronics Co., Ltd.).

A part of the fine particle dispersion liquid (W0-1) was dried to isolate the resin (a1-1). The resin component had a glass transition temperature (TgA) of 75°C and an acid value of 195 mgKOH/g.

<Manufature of Aqueous Dispersion Liquid (W-1) of Fine Resin Particles (A-1)>

Next, 667 parts by mass of an aqueous dispersion liquid of fine resin particles (A) (W0-1) and 248 parts by mass of water were charged into a reaction vessel equipped with an agitator, a heating and cooling device, and a thermometer, and 0.267 parts by mass of tertiary-butyl hydroperoxide (Perbutyl H, manufactured by NOF Corporation) was added to the mixture, followed by heating to raise the internal temperature of the system to 70°C, and then 43.3 parts by mass of styrene, 23.3 parts by mass of butyl acrylate, and 18.0 parts by mass of a 1% ascorbic acid aqueous solution were dropped over 2 hours.

After that, an aqueous dispersion liquid (W-1) of fine resin particles (A-1) containing resin (a2-1) and resin (a1-1), a polymer copolymerized by the aforementioned monomers, as constituent components in the same particle, was obtained by aging at 70°C for 4 hours.

The volume average particle size of the fine resin particles (A-1) was measured in the same manner as above, and it was 17.3 nm.

The resin (a2-1) was isolated by neutralizing an aqueous dispersion liquid (W-1) of the fine resin particles (A-1) with a 10% aqueous ammonia solution to pH 9.0, followed by drying the centrifuged precipitate. The glass transition temperature (Tg) of the resin was 61°C.

It was confirmed that the aqueous dispersion liquid (W-1) of fine resin particles (A-1) contains resin (a1-1) and resin (a2-1) as constituent components in the same particle as follows. Specifically, 2 parts by mass of gelatin (Cook Gelatin, manufactured by Morinaga Dairy Co., Ltd.) were added to 15 parts by mass of water warmed to 95 to 100°C, dissolved, and mixed with the aqueous dispersion liquid (W-1) of the fine resin particles (A-1) at a mass ratio of 1:1 into an air-cooled gelatin aqueous solution at 40°C, stirred well, and cooled at 10°C for 1 hour to prepare a hardened gel.

The gels were confirmed in an ultramicrotome (Ultramicrotome UC7, FC7, Leica Microsystems) by sectioning at -80°C with a thickness of 80 nm followed by vapor-phase staining with 2% ruthenium tetroxide aqueous solution for 5 min followed by transmission electron microscopy (H-7100, manufactured by Hitachi Technologies Corporation) observations.

<Manufacture of Organic Fine Particle Emulsion (Fine Particle Dispersion Liquid)>

683 parts by mass of water, 11 parts by mass of sodium salt of methacrylate ethylene oxide adduct sulfate (Trade name: Eleminol RS-30, manufactured by Sanyo Chemical), 138 parts by mass of styrene, 138 parts by mass of methacrylic acid, and 1 part by mass of ammonium persulfate were charged into a reaction vessel equipped with a stirring rod and a thermometer, and the mixture was stirred at 400 revolutions per minute for 15 minutes to obtain a white emulsion. This was heated to raise the temperature in the system to 75°C and allowed to react for 5 hours. In addition, 30 parts by mass of 1% ammonium persulfate aqueous solution was added and the mixture was aged at 75°C for 5 hours to obtain an aqueous dispersion liquid of a fine particle dispersion liquid 2 of vinyl resin (copolymers of sodium salts of styrene-methacrylic acid-methacrylate ethylene oxide adduct sulfate esters).

When the fine particle dispersion liquid 2 was measured by a laser diffraction/scattering particle size distribution measuring device (LA-920, manufactured by HORIBA), the volume average particle size was 0.14 um. A part of the fine particle dispersion liquid 2 was dried to isolate the resin component.

(Production Example 1)

[Production of Aqueous Dispersion Liquid (W0-1) of Fine Resin Particles (A)]

3710 parts by mass of water and 200 parts by mass of polyoxyethylene-1-(allyloxymethyl) alkyl ether ammonium sulfate (Aqualone KH-1025, manufactured by Daiichi Kogyo Pharmaceutical Co., Ltd.) were charged into a reaction vessel equipped with an agitator, a heating and cooling device, and a thermometer, and the mixture was stirred at 200 revolutions per minute to homogenize the mixture. The homogenized mixture was heated to raise the internal temperature of the system to 75°C, 90 parts by mass of 10% ammonium persulfate aqueous solution was added, and then a mixture consisting of 450 parts by mass of styrene, 250 parts by mass of butyl acrylate, and 300 parts by mass of methacrylic acid was added dropwise over 4 hours.

After that, the fine particle dispersion liquid (W0-1) containing the above monomer and resin (a1-1) which is a polymer copolymerized with polyoxyethylene-1-(allyloxymethyl) alkyl ether ammonium sulfate was obtained by aging at 75°C for 4 hours.

The volume average particle size of the fine particles in the fine particle dispersion liquid (W0-1) was 15 nm as measured by dynamic light scattering (Light scattering electrophoresis equipment: ELS-8000, manufactured by Otsuka Electronics Co., Ltd.).

A part of the fine particle dispersion liquid (W0-1) was dried to isolate the resin (a1-1). The resin component had a glass transition temperature (TgA) of 75°C and an acid value of 195 mgKOH/g.

(Production Example 2)

[Production of Aqueous Dispersion Liquid (W0-2) of Fine Resin Particles (A)]

3810 parts by mass of water and 100 parts by mass of polyoxyethylene-1-(allyloxymethyl) alkyl ether ammonium sulfate (Aqualone KH-1025, manufactured by Daiichi Kogyo Pharmaceutical Co., Ltd.) were charged into a reaction vessel equipped with an agitator, a heating and cooling device, and a thermometer, and the mixture was stirred at 200 revolutions per minute to homogenize the mixture. The homogenized mixture was heated to raise the internal temperature of the system to 75°C, 90 parts by mass of 10% ammonium persulfate aqueous solution was added, and then a mixture consisting of 400 parts by mass of styrene, 300 parts by mass of butyl acrylate, and 300 parts by mass of methacrylic acid was added dropwise over 4 hours.

After that, the fine particle dispersion liquid (W0-2) containing the above monomer and resin (a2-1) which is a polymer copolymerized with polyoxyethylene-1-(allyloxymethyl) alkyl ether ammonium sulfate was obtained by aging at 75°C for 4 hours.

The volume average particle size of the fine particles in the fine particle dispersion liquid (W0-2) was 45 nm as similarly measured in the Manufacture Example 1.

A part of the fine particle dispersion liquid (W0-2) was dried to isolate the resin (a2-1). The resin component had a glass transition temperature (TgA) of 65°C and an acid value of 195 mgKOH/g.

(Production Example 3)

[Production of Aqueous Dispersion Liquid (W-1) of Fine Resin Particles (A-1)]

667 parts by mass of an aqueous dispersion liquid of fine resin particles (A) (W0-1) and 248 parts by mass of water were charged into a reaction vessel equipped with an agitator, a heating and cooling device, and a thermometer, and 0.267 parts by mass of tertiary-butyl hydroperoxide (Perbutyl H, manufactured by NOF Corporation) was added to the mixture, followed by heating to raise the internal temperature of the system to 70°C, and then 43.3 parts by mass of styrene, 23.3 parts by mass of butyl acrylate, and 18.0 parts by mass of a 1% ascorbic acid aqueous solution were dropped over 2 hours.

After that, an aqueous dispersion liquid (W-1) of fine resin particles (A-1) containing resin (a2-1) and resin (a1-1), a polymer copolymerized by the aforementioned monomers, as constituent components in the same particle, was obtained by aging at 70°C for 4 hours.

The volume average particle size of the fine resin particles (A-1) was measured in the same manner as above, and it was 17.3 nm.

The resin (a2-1) was isolated by neutralizing an aqueous dispersion liquid (W-1) of the fine resin particles (A-1) with a 10% aqueous ammonia solution to pH 9.0, followed by drying the centrifuged precipitate. The glass transition temperature (Tg) of the resin was 61°C.

It was confirmed that the aqueous dispersion liquid (W-1) of the fine resin particles (A-1) contains resin (a1-1) and resin (a2-1) as constituent components in the same particle as follows. Specifically, 2 parts by mass of gelatin (Cook Gelatin, manufactured by Morinaga Dairy Co., Ltd.) were added to 15 parts by mass of water warmed to 95 to 100°C, dissolved, and mixed with the aqueous dispersion liquid (W-1) of the fine resin particles (A-1) at a mass ratio of 1:1 into an air-cooled gelatin aqueous solution at 40°C, stirred well, and cooled at 10°C for 1 hour to prepare a hardened gel.

The gels were confirmed in an ultramicrotome (Ultramicrotome UC7, FC7, Leica Microsystems) by sectioning at -80°C with a thickness of 80 nm followed by vapor-phase staining with 2% ruthenium tetroxide aqueous solution for 5 min followed by transmission electron microscopy (H-7100, manufactured by Hitachi Technologies Corporation) observations.

(Production Example 4)

[Production of Aqueous Dispersion Liquid (W-2) of Fine Resin Particles (A-2)]

667 parts by mass of an aqueous dispersion liquid of fine resin particles (A) (W0-2) and 248 parts by mass of water were charged into a reaction vessel equipped with an agitator, a heating and cooling device, and a thermometer, and 0.267 parts by mass of tertiary-butyl hydroperoxide (Perbutyl H, manufactured by NOF Corporation) was added to the mixture, followed by heating to raise the internal temperature of the system to 70°C, and then 43.3 parts by mass of styrene, 23.3 parts by mass of butyl acrylate, and 18.0 parts by mass of a 1% ascorbic acid aqueous solution were dropped over 2 hours.

After that, an aqueous dispersion liquid (W-2) of fine resin particles (A-2) containing resin (a2-2) and resin (a1-2), a polymer copolymerized by the aforementioned monomers, as constituent components in the same particle, was obtained by aging at 70°C for 4 hours.

The volume average particle size of the fine resin particles (A-2) was measured in the same manner as above, and it was 51.5 nm.

The resin (a2-3) was isolated by neutralizing an aqueous dispersion liquid (W-2) of the fine resin particles (A-2) with a 10% aqueous ammonia solution to pH 9.0, followed by drying the centrifuged precipitate. The glass transition temperature (Tg) of the resin was 55°C.

It was confirmed by the same method as in Production Example 4 that the dispersion liquid (W-2) of fine resin particles (A-2) contains resin (a1-2) and resin (a2-2) as constituent components in the same particle.

(Production Example 5)

<Synthesis of Amorphous Polyester Resin (b-1)>

425 parts by mass of bisphenol A-PO 2 mol adduct, 100 parts by mass of propylene glycol, 634 parts by mass of terephthalic acid-propylene glycol 2 mol adduct, and 0.5 parts by mass of titanium diisopropoxy bistriethanol aminate as a condensation catalyst were charged into a reaction vessel equipped with a cooling tube, an agitator, a heating and cooling device, a thermometer, and a nitrogen introduction tube, and the reaction was carried out at 230°C for 12 hours.

The mixture was then allowed to react under a reduced pressure of 10 to 15 mmHg.

The amount of propylene glycol recovered was 195 parts by mass.

After cooling to 180°C, 30 parts by mass of trimellitic anhydride was added to the mixture and allowed to react at 180°C for 1 hour before being taken out from the reaction vessel.

After cooling the extracted resin to room temperature, an amorphous polyester (b-1) was obtained. The resin component had a glass transition temperature (Tg) of 42°C, a number-average molecular weight (Mn) of 2,400, a weight-average molecular weight (Mw) of 5,400, a hydroxyl value of 32 mgKOH/g, and an acid value of 18 mgKOH/g.

(Production Example 6)

<Production of Colorant Dispersion Liquid >

557 parts by mass of propylene glycol, 569 parts by mass of terephthalic acid dimethyl ester, 184 parts by mass of adipic acid, and 3 parts by mass of tetrabutoxychinanate as a condensation catalyst were charged into a reaction vessel equipped with a cooling tube, an agitator, a heating and cooling device, a thermometer, and a nitrogen introduction tube, and the reaction was carried out under a stream of nitrogen at 180°C for 8 hours while distilling off the methanol produced.

Then, the reaction was carried out for 4 hours by distilling off propylene glycol and water generated under a stream of nitrogen while the temperature was gradually raised to 230°C. Then, the reaction was carried out for 1 hour under reduced pressure of 0.007 MPa to 0.026 MPa.

The amount of propylene glycol recovered was 175 parts by mass.

Then, the mixture was cooled to 180°C, 121 parts by mass of trimellitic anhydride was added, and the mixture was reacted for 2 hours under airtight atmospheric pressure, then heated to 220°C under atmospheric pressure until the softening point reached 180°C, and the polyester resin (number average molecular weight (Mn) = 8,500) was obtained.

20 parts by mass of copper phthalocyanine, 4 parts by mass of a colorant dispersant (Solspars 28000, manufactured by Abisia), 20 parts by mass of the obtained polyester resin, and 56 parts by mass of ethyl acetate were put into a beaker, and after stirring to disperse uniformly, the copper phthalocyanine was microdispersed by a bead mill to obtain a colorant dispersion liquid.

The volume average particle size of the resulting colorant dispersion liquid was 0.2 um.

(Production Example 7)

<Production of Modified Wax (d)>

454 parts by mass of xylene and 150 parts by mass of low molecular weight polyethylene (Sun Wax LEL-400, manufactured by Sanyo Chemical Industries, Inc.) were charged into a pressure-resistant reaction vessel equipped with an agitator, a heating and cooling device, a thermometer, and a dropping cylinder, and after nitrogen substitution, the temperature was raised to 170°C under stirring, and at the same temperature, a mixed solution of 595 parts by mass of styrene, 255 parts by mass of methyl methacrylate, 34 parts by mass of di-t-butyl peroxyhexahydroterephthalate, and 119 parts by mass of xylene was dropped over 3 hours, and kept at the same temperature for 30 minutes.

The xylene was then distilled under a reduced pressure of 0.039 MPa to obtain a modified wax (d) .

The graft chain of the modified wax (d) had an SP value of 10.35 (cal/cm$^3$)$^{1/2}$, a number-average molecular weight (Mn) of 1,900, a weight-average molecular weight (Mw) of 5,200, and a glass transition temperature (Tg) of 57°C.

(Production Example 8)

<Production of Releasing Agent Dispersion Liquid>

10 parts by mass of paraffin wax (HNP-9, manufactured by Nippon Seiro Co., Ltd.), 1 part by mass of modified wax (d), and 33 parts by mass of ethyl acetate were charged into a reaction vessel equipped with a cooling tube, an agitator, a heating and cooling device, and a thermometer, and the temperature was raised to 78°C and stirred at the same temperature for 30 minutes, and then cooled to 30°C over 1 hour to crystallize the paraffin wax into fine particles, which were further wet-ground with an ultra-visco mill (manufactured by Imex) to obtain a releasing agent dispersion liquid.

The volume average particle size of the releasing agent dispersion liquid was 0.25 um.

(Production Example 9)

<Production of Reactive Prepolymers (α2b-1)>

3-methyl-1,5-pentanediol, isophthalic acid, adipic acid, and trimellitic anhydride were charged together with titanium tetraisopropoxide (1,000 ppm relative to the resin component) in a reaction vessel equipped with a cooling tube, an agitator, and a nitrogen-induction tube so that the molar ratio of hydroxyl and carboxyl groups, OH/COOH, was 1.5, the composition of the diol component was 100 mol% of 3-methyl-1,5-pentanediol, the composition of the dicarboxylic acid component was 40 mol% of isophthalic acid and 60 mol% of adipic acid, and the amount of trimellitic anhydride in the total monomer was to be 1 mol%.

Then, the temperature was raised to 200°C in about 4 hours, and then raised to 230°C over 2 hours, and the reaction was carried out until the effluent was exhausted.

It was then further reacted for 5 hours under a reduced pressure of 10 to 15 mmHg to obtain an intermediate polyester C-1.

Then, the intermediate polyester C-1 was charged with isophorone diisocyanate (IPDI) at a molar ratio (isocyanate group of IPDI/hydroxyl group of the intermediate polyester) of 2.0 in a reaction vessel equipped with a cooling tube, an agitator, and a nitrogen introduction tube, diluted the mixure to be a 50% of ethyl acetate solution with ethyl acetate, and the mixture was reacted at 100°C for 5 hours to obtain a reactive prepolymer (α2b-1).

(Production Example 10)

<Preparation of Inorganic External Additives>

<<Preparation of Inorganic External Additive 1>>

First, 100 g of silica particles (Nipsil SP-200 BET specific surface area of 200 $m^2/g$, manufactured by Tosoh Silica Corporation.) produced by the liquid phase method was dispersed in 2 L of water and warmed to 85°C. Then, a washing cake was obtained by adding an aqueous solution of zinc chloride in an amount equivalent to 10% by mass of ZnO to the silica particles, adjusting the pH to 8.0 with an aqueous solution of sodium hydroxide, holding the cake with stirring for 30 minutes, then filtering and washing the residue on the filter medium with water. The washed cake was then dried at 120°C and then crushed with a media-type microcrusher. Finally, 40 g of the obtained powder was fed into a small mixer, 10 g of isobutyltrimethoxysilane was added and mixed for 15 minutes, and then re-dried at 120°C to prepare an inorganic external additive 1.

<<Preparation of Inorganic External Additive 2>>

First, 100 g of silica particles (Nipsil SP-200 BET specific surface area of 200 $m^2/g$, manufactured by Tosoh Silica Corporation.) produced by the liquid phase method was dispersed in 2 L of water and warmed to 85°C. Then, a washing cake was obtained by adding an aqueous solution of aluminum chloride in an amount equivalent to 10% by mass of $Al_2O_3$ to the silica particles, adjusting the pH to 5.5 with an aqueous solution of sodium hydroxide, holding the cake with stirring for 30 minutes, then filtering and washing the residue on the filter medium with water. The washed cake was then dried at 120°C and then crushed with a media-type microcrusher. Finally, 40 g of the obtained powder was fed into a small mixer, 10 g of isobutyltrimethoxysilane was added and mixed for 15 minutes, and then re-dried at 120°C to prepare an inorganic external additive 2.

<<Preparation of Inorganic External Additive 3>>

First, 100 g of silica particles (Nipsil SP-200 BET specific surface area of 200 $m^2/g$, manufactured by Tosoh Silica Corporation.) produced by the liquid phase method was dispersed in 2 L of water and warmed to 85°C. Then, a washing cake was obtained by adding an aqueous solution of magnesium chloride in an amount equivalent to 10% by mass of MgO to the silica particles, adjusting the pH to 5.0 with an aqueous solution of sodium hydroxide, holding the cake with stirring for 30 minutes, then filtering and washing the residue on the filter medium with water. The washed cake was then dried at 120°C and then crushed with a media-type microcrusher. Finally, 40 g of the obtained powder was fed into a small mixer, 10 g of isobutyltrimethoxysilane was added and mixed for 15 minutes, and then re-dried at 120°C to prepare an inorganic external additive 3.

<<Preparation of Inorganic External Additive 4>>

First, 100 g of silica particles (Nipsil SP-200 BET specific surface area of 200 $m^2/g$, manufactured by Tosoh Silica Corporation.) produced by the liquid phase method was dispersed in 2 L of water and warmed to 85°C. Then, a washing cake was obtained by adding an aqueous solution of iron chloride in an amount equivalent to 10% by mass of FeO to the silica particles, adjusting the pH to 8.5 with an aqueous solution of sodium hydroxide, holding the cake with stirring for 30 minutes, then filtering and washing the residue on the filter medium with water. The washed cake was then dried at 120°C and then crushed with a media-type microcrusher. Finally, 40 g of the obtained powder was fed into a small mixer, 10 g of isobutyltrimethoxysilane was added and mixed for 15 minutes, and then re-dried at 120°C to prepare an inorganic external additive 4.

<<Preparation of Inorganic External Additive 5>>

First, 100 g of silica particles (Nipsil SP-200 BET specific surface area of 200 $m^2/g$, manufactured by Tosoh Silica Corporation.) produced by the liquid phase method was dispersed in 2 L of water and warmed to 85°C. Then, a washing cake was obtained by adding an aqueous solution of cobalt chloride in an amount equivalent to 10% by mass of $C_oO$ to the silica particles, adjusting the pH to 9.0 with an aqueous solution of sodium hydroxide, holding the cake with stirring for 30 minutes, then filtering and washing the residue on the filter medium with water. The washed cake was then dried at 120°C and then crushed with a media-type microcrusher. Finally, 40 g of the obtained powder was fed into a small mixer, 10 g of isobutyltrimethoxysilane was added and mixed for 15 minutes, and then re-dried at 120°C to prepare an inorganic external additive 5.

**EP 4 239 412 A1**

<<Preparation of Inorganic External Additive 6>>

First, 100 g of titanium oxide was dispersed in 2 L of water and warmed to 85°C. Then, a washing cake was obtained by adding an aqueous solution of iron chloride in an amount equivalent to 10% by mass of FeO to the titanium particles, adjusting the pH to 8.5 with an aqueous solution of sodium hydroxide, holding the cake with stirring for 30 minutes, then filtering and washing the residue on the filter medium with water. The washed cake was then dried at 120°C and then crushed with a media-type microcrusher. Finally, 40 g of the obtained powder was fed into a small mixer, 10 g of isobutyltrimethoxysilane was added and mixed for 15 minutes, and then re-dried at 120°C to prepare an inorganic external additive 6.

<<Preparation of Inorganic External Additive 7>>

First, 100 g of silica particles (Nipsil SP-200 BET specific surface area of 200 $m^2$/g, manufactured by Tosoh Silica Corporation.) produced by the liquid phase method was dispersed in 2 L of water and warmed to 85°C. Then, a washing cake was obtained by adding an aqueous solution of aluminum chloride in an amount equivalent to 10% by mass of $Al_2O_3$ to the silica particles, adjusting the pH to 5.5 with an aqueous solution of sodium hydroxide, holding the cake with stirring for 30 minutes, then filtering and washing the residue on the filter medium with water. The washed cake was then dried at 120°C and then crushed with a media-type microcrusher. Finally, 40 g of the obtained powder was fed into a small mixer, 10 g of decyltrimethoxysilane was added and mixed for 15 minutes, and then re-dried at 120°C to prepare an inorganic external additive 7.

<<Preparation of Inorganic External Additive 8>>

First, 100 g of titanium oxide was dispersed in 2 L of water and warmed to 85°C. Then, a washing cake was obtained by adding an aqueous solution of aluminum chloride in an amount equivalent to 10% by mass of $Al_2O_3$ to the titanium particles, adjusting the pH to 9.0 with an aqueous solution of sodium hydroxide, holding the cake with stirring for 30 minutes, then filtering and washing the residue on the filter medium with water. The washed cake was then dried at 120°C and then crushed with a media-type microcrusher to prepare an inorganic external additive 8.

<<Preparation of Inorganic External Additive 9>>

First, 100 g of silica particles (Nipsil SP-200 BET specific surface area of 200 $m^2$/g, manufactured by Tosoh Silica Corporation.) produced by the liquid phase method was charged into a small mixer, 10 g of isobutyl trimethoxysilane was added and mixed for 15 minutes, and then re-dried at 120°C to prepare an inorganic external additive 9.

Details of the inorganic external additives used are shown in Table 1.

[Table 1]

| | Base material | Surface treatment | |
| --- | --- | --- | --- |
| | Metaloxide | Metalhydroxide | Alkylsilane |
| Inorganic external additive 1 | Silica | Zinc hydroxide | Isobutylsilane |
| Inorganic external additive 2 | Silica | Aluminum hydroxide | Isobutylsilane |
| Inorganic external additive 3 | Silica | Magnesium hydroxide | Isobutylsilane |
| Inorganic external additive 4 | Silica | Iron hydroxide | Isobutylsilane |
| Inorganic external additive 5 | Silica | Cobalt hydroxide | Isobutylsilane |
| Inorganic external additive 6 | Titanium | Iron hydroxide | Isobutylsilane |
| Inorganic external additive 7 | Silica | Aluminum hydroxide | Decylsilane |
| Inorganic external additive 8 | Titanium | Aluminum hydroxide | - |
| Inorganic external additive 9 | Silica | - | Isobutylsilane |

(Example 1)

<Production of Composite Resin Particles (C-1)>

165 parts by mass of ion-exchanged water, 5 parts by mass of a fine particle dispersion liquid (W-1) and 10 parts by mass of a fine particle dispersion liquid (W0-1), 1 part by mass of sodium carboxymethyl cellulose, 26 parts by mass of sodium dodecyl diphenylether disulfonate (EREMINOL MON-7, manufactured by Sanyo Chemical Industries, Ltd.), and 15 parts by mass of ethyl acetate were charged into a beaker, and the mixed dispersion liquid was obtained.
Then, 71 parts by mass of an amorphous polyester resin (b-1), 40 parts by mass of a colored dispersion liquid, 39 parts by mass of a releasing agent dispersion liquid, and 54 parts by mass of ethyl acetate were charged into another beaker, and after mixing, 18 parts by mass of a reactive prepolymer ($\alpha$2b-1) solution and 0.3 parts by mass of isophorone diamine as a hardener ($\beta$) were charged into the beaker, and the mixture was obtained.
This mixture was added in its entirety to the dispersion liquid prepared earlier, and the mixture was obtained by stirring with a TK autohomo mixer for 2 minutes.
Then, the mixture was transferred to a reaction vessel equipped with an agitator and a thermometer, and ethyl acetate was distilled off until the concentration was to be 0.5% by mass or less at 50°C to carry out the compositing process to obtain a dispersion liquid of composite resin particles.
The dispersion liquid of the composite resin particles is composite resin particles in which fine particles containing the fine resin particles (A-1) adhere to resin particles (B'-1) containing an amorphous polyester resin (b-1) and an amorphous polyurethane resin (b-2) composed of a reactive prepolymer ($\alpha$2b-1) and a reactant of isophorone diamine.
It was confirmed that the resin particles contained in the dispersion liquid of the composite resin particles were composite resin particles (C-1) in which the fine particles containing the fine resin particles (A-1) adhered to the resin particles (B'-1) by magnifying the shape of the particles contained in the dispersion liquid of the composite resin particles with a scanning electron microscope (SU-8230, manufactured by Hitachi High Technologies, Ltd.).
Next, sodium hydroxide was added so that the pH of the dispersion liquid of the composite resin particles was to be 12, and the mixture was stirred with a three-one motor for 1 hour. Then, centrifugal filtration was carried out, and ion exchange water was added again to make a reslurry. The process of centrifugal filtration and reslurry was repeated several times, followed by suction filtration (hereinafter referred to as "washing and filtration process") using a membrane filter, drying at 40°C for 18 hours, and the volatile content was reduced to 0.5% by mass or less to obtain toner based particles 1.
100 parts by mass of toner based particles, 1.5 parts by mass of hydrophobic silica particles with an average particle size of 50 nm, and 1.0 parts by mass of the inorganic external additive 1 were mixed with the toner based particles 1 using a Henschel mixer (manufactured by Mitsui Mining Co., Ltd.) to obtain a toner 1.

(Example 2)

15 parts by mass of a mixture containing 5 parts by mass of a fine particle dispersion liquid (W-1) and 10 parts by mass of a fine particle dispersion liquid (W0-1) in Example 1 was changed to 15 parts by mass of a mixture containing 7.5 parts by mass of a fine particle dispersion liquid (W-1) and 7.5 parts by mass of a fine particle dispersion liquid (W0-1) in Example 2 to obtain toner based particles 2. The inorganic external additive 1 in Example 1 was changed to the inorganic external additive 2 for the toner based particle 2, and external additive treatment was performed to obtain a toner 2. Evaluation was performed in the same manner as in Example 1 except that the toner 2 was used.

(Example 3)

15 parts by mass of a mixture containing 5 parts by mass of a fine particle dispersion liquid (W-1) and 10 parts by mass of a fine particle dispersion liquid (W0-1) in Example 1 was changed to 15 parts by mass of a mixture containing 10 parts by mass of a fine particle dispersion liquid (W-1) and 5 parts by mass of a fine particle dispersion liquid (W0-1) in Example 3 to obtain toner based particles 3. The inorganic external additive 1 in Example 1 was changed to the inorganic external additive 3 for the toner based particle 3, and external additive treatment was performed to obtain a toner 3. Evaluation was performed in the same manner as in Example 1 except that the toner 3 was used.

(Example 4)

The inorganic external additive 3 in Example 3 was changed to the inorganic external additive 4 in Example 4, and external additive treatment was performed to obtain a toner 4. Evaluation was performed in the same manner as in Example 1 except that the toner 4 was used.

(Example 5)

The inorganic external additive 3 in Example 3 was changed to the inorganic external additive 5 in Example 5, and external additive treatment was performed to obtain a toner 5. Evaluation was performed in the same manner as in Example 1 except that the toner 5 was used.

(Example 6)

The inorganic external additive 3 in Example 3 was changed to the inorganic external additive 6 in Example 6, and external additive treatment was performed to obtain a toner 6. Evaluation was performed in the same manner as in Example 1 except that the toner 6 was used.

(Example 7)

The inorganic external additive 3 in Example 3 was changed to the inorganic external additive 7 in Example 7, and external additive treatment was performed to obtain a toner 7. Evaluation was performed in the same manner as in Example 1 except that the toner 7 was used.

(Example 8)

The inorganic external additive 3 in Example 3 was changed to the inorganic external additive 8 in Example 8, and external additive treatment was performed to obtain a toner 8. Evaluation was performed in the same manner as in Example 1 except that the toner 8 was used.

(Comparative Example 1)

The inorganic external additive 3 in Example 3 was changed to the inorganic external additive 9 in Comparative Example 1, and external additive treatment was performed to obtain a toner 9. Evaluation was performed in the same manner as in Example 1 except that the toner 9 was used.

(Comparative Example 2)

15 parts by mass of a mixture containing 5 parts by mass of a fine particle dispersion liquid (W-1) and 10 parts by mass of a fine particle dispersion liquid (W0-1) in Example 1 was changed to 15 parts by mass of a mixture containing 2.5 parts by mass of a fine particle dispersion liquid (W-1) and 12.5 parts by mass of a fine particle dispersion liquid (W0-1) in Comparative Example 2 to obtain toner based particles 4. The inorganic external additive 1 in Example 1 was changed to the inorganic external additive 2 for the toner based particle 4, and external additive treatment was performed to obtain a toner 10. Evaluation was performed in the same manner as in Example 1 except that the toner 10 was used.

(Comparative Example 3)

15 parts by mass of a mixture containing 5 parts by mass of a fine particle dispersion liquid (W-1) and 10 parts by mass of a fine particle dispersion liquid (W0-1) in Example 1 was changed to 15 parts by mass of a mixture containing 11.25 parts by mass of a fine particle dispersion liquid (W-1) and 3.75 parts by mass of a fine particle dispersion liquid (W0-1) in Comparative Example 3 to obtain toner based particles 5. The inorganic external additive 1 in Example 1 was changed to the inorganic external additive 2 for the toner based particle 5, and external additive treatment was performed to obtain a toner 11. Evaluation was performed in the same manner as in Example 1 except that the toner 11 was used.

<Preparation of Carrier>

100 parts by mass of silicone resin (organostraight silicone), 5 parts by mass of γ-(2-aminoethyl) aminopropyltrimethoxysilane, and 10 parts by mass of carbon black were added to 100 parts by mass of toluene, and dispersed for 20 minutes with a homomixer to prepare a resin layer coating solution. A carrier was prepared by applying the resin layer coating solution to the surface of 1,000 parts by mass of spherical magnetite with a volume-average particle size of 50 um using a fluidized-bed coating apparatus.

<Preparation of Developer>

Using a ball mill, 5 parts by mass of each toner and 95 parts by mass of each carrier were mixed to make each developer.

The coverage of the fine resin particles on the surface of the toner based particles was determined by observing the fine resin particles on the surface of the toner based with a scanning electron microscope (SEM) and calculating the surface area ratio of the fine resin particles to the surface area of the toner based using an image processing software.

Fine resin particles were observed by removing the external additive as much as possible through the release treatment of the external additive by ultrasonic waves so that the particles were close to the condition of the toner based particles.

<Measurement of Distance Between Fine Resin Particles>

-Method of releasing external additives-

[1] To a 100 ml screw tube, 50 ml of a 5% aqueous solution (Product name: NOIGEN ET-165, manufactured by Daiichi Kogyo Pharmaceutical Co., Ltd.) containing a surfactant was added, and 3 g of toner was added to the mixture and gently moved up, down, left, and right. Then, the toner was stirred in a ball mill for 30 minutes so that the toner is blend into the dispersion liquid.

[2] An ultrasonic homogenizer (Product name: homogenizer, Type: VCX750, CV33, manufactured by SONICS & MATERIALS Limited) was then used to apply ultrasonic energy for 60 minutes at an output power of 40 W.

**-** Ultrasonic conditions-

·Vibration time: 60 minutes continuous

·Amplitude: 40 W

·Vibration start temperature: 23±1.5°C

·Temperature during vibration: 23±1.5°C

[3]

(1) The dispersion liquid was suction-filtered with a filter paper (Product name: Qualitative filter paper (No. 2, 110 mm), manufactured by Advantech Toyo Co., Ltd.), washed twice again with ion-exchanged water and filtered, and the toner particles were dried after the freed additives were removed.

(2) The toner particles obtained in (1) were observed under a scanning electron microscope (SEM) under the following observation conditions. First, by observing reflected electron images, external additives and fillers containing Si were detected.

(3) The image in (1) was binarized by image processing software (ImageJ) to eliminate the external additive and filler.

The secondary electron image was then observed at the same position as in (1). Since the fine resin particles were not observed in the reflected electron image but only in the secondary electron image, these images were compared with the image obtained in (3), and the fine particles present in the portion other than the residual external additive and the filler (the portion other than the portion excluded in (3)) were observed as fine resin particles.

[Shooting Conditions]

·Scanning electron microscope: SU-8230 (manufactured by Hitachi High Technologies)

·Shooting magnification: 35000 times

·Image: SE (L): secondary electron, BSE (reflected electron)

·Acceleration voltage: 2.0 kV

·Acceleration current: 1.0 $\mu$A

·Probe current: Normal

·Focus Mode: UHR

·WD: 8.0 mm

Then, using the toner 1 to toner 8, the toner 9 to toner 11, and developer, the low-temperature fixability, heat-resistant storage stability, filming resistance of additives, and charging stability were evaluated as follows. The results are shown in Table 2.

<Low-Temperature Fixability>

Each toner was evenly placed on a paper so as to be 0.8 mg/cm$^2$. In this case, in the method of placing the powder on a paper, a printer in which a heat fixer was removed was used. Other methods may be used if the powder can be uniformly placed at the above weight density. The cold-offset generation temperature (MFT) was measured when the paper placed with the powder was passed through a pressure roller at a fixing speed (heating roller circumferential speed) of 213 mm/sec and a fixing pressure (pressure roller pressure) of 10 kg/cm$^2$, and the cold-offset performance was evaluated based on the cold-offset evaluation criteria described below. The lower the temperature at which the cold offset occurs, the better the low-temperature fixability.

[Cold Offset Evaluation Criteria]

A: The lower limit temperature for fixing is 130°C or lower.
B: The lower fixing temperature is higher than 130°C and 135°C or lower.
C: The lower fixing temperature is higher than 135°C and 140°C or lower.
D: The lower fixing temperature is higher than 140°C.

<Heat-Resistant Storage Stability>

After storing each toner at 50°C for 8 hours, the toner was sieved with a 42-mesh sieve for 2 minutes, the residual proportion on the wire mesh was measured, and the heat-resistant storage stability was evaluated according to the following evaluation criteria. The more the toner having favorable heat-resistant storage stability, the smaller the residual proportion.

[Evaluation Criteria]

A: The residual proportion is less than 5%.
B: The residual proportion is 5% or higher and less than 15%.
C: The residual proportion is 15% or higher and less than 30%.
D: The residual proportion is 30% or higher.

<Filming Resistance of Additives (Inorganic Fine Particles)>

Using an image forming apparatus (imageo MP C5002, manufactured by Ricoh Co., Ltd.), in a laboratory environment of 27°C and 90% RH, 5,000 sheets (A4 size horizontal) of vertical band charts with an image area ratio of 30% were output at 3 sheets per print job. Then, the photoconductor was visually observed after printing one halftone image after having printed 5,000 sheets (A4 size horizontal) of white paper at 3 sheets per print job, and the filming resistance of the additive was evaluated according to the following evaluation criteria.

[Evaluation Criteria]

A: No problem with the photoconductor. There is nothing wrong with the quality.
B: There is a slight filming in the printing direction, but the image shows an acceptable level of quality.
C: Filming occurs clearly in the photoconductor, and the image shows a problematic level of quality.

<Charging Stability>

Each developer was used in a character image pattern with an image area proportion of 12% to perform a durability test in which 100,000 images were continuously output, and the change in charging amount was evaluated. A small amount of developer was collected from the developing sleeve, the change in charging amount was determined by the blow-off method, and evaluated according to the following criteria. Note that "C" or higher is the actual usable level.

[Evaluation Criteria]

A: The change in charging amount is less than 3 $\mu$C/g.
B: The change in the charging amount is 3 $\mu$C/g or more and less than 6 uC/g.
C: The change in charging amount is 6 $\mu$C/g or more and less than 10 $\mu$C/g.
D: The change in charging amount is 10 $\mu$C/g or more.

[Overall Evaluation]

The overall evaluation was evaluated based on the following criteria.
Those having "A" among all evaluation items were determined as "A", those having one to three "A" among all evaluation items and having "B" for the rest were determined as "B", those having two or fewer "B" among all evaluation items and having "C" for the rest were determined as "C", and those having "D" among all evaluation items were determined as "D".

[Evaluation Criteria]

A: Excellent
B: Good
C: Slightly better than conventional
D: Not practical

[Table 2]

| | | Examples | | | | | | | | Com parative Exam pies | | |
|---|---|---|---|---|---|---|---|---|---|---|---|---|
| | | 1 | 2 | 3 | 4 | 5 | 6 | 7 | 8 | 1 | 2 | 3 |
| Toner No. | | Toner 1 | Toner 2 | Toner 3 | Toner 4 | Toner 5 | Toner 6 | Toner 7 | Toner 8 | Toner 9 | Toner 10 | Toner 11 |
| Fine resin particles | Coverage [%] | 30 | 70 | 50 | 50 | 50 | 50 | 50 | 50 | 50 | 95 | 20 |
| Inorganic external additive | Released amount | 0.56 | 1.94 | 1.10 | 1.24 | 1.37 | 1.65 | 1.78 | 2.02 | 1.96 | 2.10 | 0.22 |
| Evaluation results | Low - termperature fixability | A | A | A | A | A | B | A | B | B | C | D |
| | Heat-resistant storage stability | A | A | A | A | A | B | A | C | B | B | D |
| | Filming resistance of additive | A | A | A | B | B | B | A | B | C | C | B |
| | Charging stability | A | A | A | B | B | B | B | C | D | D | C |
| | Overall evaluation | A | A | A | B | B | C | B | C | D | D | D |

As shown in Table 2, in Examples 1 to 8, excellent results were obtained in terms of low-temperature fixability, heat-resistant storage stability, filming resistance of additives, and charging stability. By controlling the coverage of fine resin particles on the surface of the toner based surface and the surface treatment agent of the inorganic external additive, the low-temperature fixability, heat-resistant storage stability, and charging stability could be maintained at a high level, and the release amount of the appropriate inorganic external additive could be controlled, thus improving the filming properties of the additive.

On the other hand, in Comparative Example 1, since the inorganic external additive was not coated with hydroxide of metal elements, the charge stability was lower and the amount of free external additive increased due to the lack of interaction between the hydroxyl groups and resin particles, which worsened the filming resistance of the additive.

In Comparative Example 2, the surface of the toner based particles became hard due to the high coverage of the fine resin particles, and the additive including inorganic external additive could not be placed on the surface of the toner based surface at an appropriate mixing strength. Therefore, it can be said that the amount of free inorganic external additive increased and the filming resistance of the additive deteriorated, while the mixing strength of the inorganic external additive was weak and the charging stability deteriorated.

In Comparative Example 3, the surface of the toner based particles was soft because the coverage of the fine resin particles was low, and it can be said that additives including the inorganic external additive was buried on the surface of the toner based particles. Therefore, it can be said that the inorganic external additive inhibited the low-temperature fixability, reduced the effect as a spacer, and deteriorated the heat-resistant storage stability.

Therefore, unlike the toners in Comparative Examples 1 to 3, the toners in Examples 1 to 8 have organic fine resin particle coverage of 30% to 70%, and the inorganic external additives covers metal element hydroxides on metal element oxide surfaces, so that the toners have excellent low-temperature fixability, heat-resistant storage stability, and charging stability, and can suppress contamination of the cleaning member and photoconductor, thereby producing high-quality toner.

As described above, the above embodiment is presented as an example, and the present invention is not limited by the above embodiment. The above embodiment can be carried out in various other forms, and various combinations, omissions, replacements, modifications, and the like can be made without departing from the gist of the invention. These embodiments and their variations are included in the scope and gist of the invention as well as in the equal scope of the invention described in the claims.

## Claims

1. A toner comprising:

   toner based particles containing a binder resin, a colorant, and a wax; and
   fine resin particles and an inorganic external additive that are present on a surface of the toner based particles,
   wherein a coverage of the fine resin particles is in a range from 30% to 70%, and
   wherein the inorganic external additive covers a surface of oxide of a metal element with hydroxide of a metal element.

2. The toner according to claim 1, wherein a top surface of the inorganic external additive is coated with alkylsilane.

3. The toner according to claim 1 or 2, wherein the oxide of the metal element is silica.

4. The toner according to any one of claims 1 to 3, wherein the hydroxide of the inorganic external additive is at least one kind selected from the group consisting of aluminum, zinc, and magnesium.

5. A developer containing the toner of any one of claims 1 to 4.

6. A toner housing unit containing the toner of any one of claims 1 to 4.

7. An image forming apparatus comprising:

   an electrostatic latent image bearer;
   an electrostatic latent image forming device that forms an electrostatic latent image on the electrostatic latent image bearer;
   a developing device that develops the electrostatic latent image to form a visible image using the toner of any one of claims 1 to 4 or using the developer of claim 5;
a transfer device that transfers the visible image onto a recording medium; and
a fixing device that fixes a transferred image onto the recording medium.

8. A method of forming images comprising:

a step of forming an electrostatic latent image, the electrostatic latent image being formed on an electrostatic latent image bearer;
a step of developing the electrostatic latent image to form a visible image using the toner of any one of claims 1 to 4 or using the developer of claim 5;
a step of transferring that transfers the visible image onto a recording medium; and
a step of fixing that fixes the transferred image onto the recording medium.

# FIG.1

EP 4 239 412 A1

# FIG.2

# FIG.3

# FIG.4

# FIG.5

Europäisches
Patentamt

European
Patent Office

Office européen
des brevets

# EUROPEAN SEARCH REPORT

Application Number

EP 23 15 8894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/041482 A1 (TERAUCHI KAZUO [JP] ET AL) 11 February 2016 (2016-02-11) | 7 | INV.<br>G03G9/097 |
| A | * paragraphs [0048], [0053], [0057], [0093], [0096], [0097], [0232]; claims 1-3 * | 1-6,8 | |
| X | US 2016/041484 A1 (TSUDA SHOHEI [JP] ET AL) 11 February 2016 (2016-02-11) | 7 | |
| A | * paragraphs [0010], [0037], [0069], [0076]; claim 1 * | 1-6,8 | |
| X | EP 3 674 800 A1 (CANON KK [JP]) 1 July 2020 (2020-07-01) | 7 | |
| A | * paragraphs [0159], [0252]; claims 1-3 * | 1-6,8 | |
| X | US 2018/067415 A1 (SUGAHARA MASANORI [JP]) 8 March 2018 (2018-03-08) | 7 | |
| A | * paragraphs [0162], [0169], [0172]; claims 1,7 * | 1-6,8 | |
| X | EP 3 674 803 A1 (CANON KK [JP]) 1 July 2020 (2020-07-01) | 7 | TECHNICAL FIELDS SEARCHED (IPC) |
| A | * paragraph [0240]; claim 1 * | 1-6,8 | G03G |
| X | JP 2017 151255 A (KYOCERA DOCUMENT SOLUTIONS INC) 31 August 2017 (2017-08-31) | 7 | |
| A | * paragraph [0134]; claims 1,3-5 * | 1-6,8 | |

The present search report has been drawn up for all claims

| Place of search | Date of completion of the search | Examiner |
|---|---|---|
| The Hague | 14 June 2023 | Vogt, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8894

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2023

| Patent document cited in search report | | Publication date | Patent family member(s) | | Publication date |
|---|---|---|---|---|---|
| US 2016041482 | A1 | 11-02-2016 | JP | 2016038591 A | 22-03-2016 |
| | | | US | 2016041482 A1 | 11-02-2016 |
| US 2016041484 | A1 | 11-02-2016 | BR | 102015018913 A2 | 10-02-2016 |
| | | | CN | 105372957 A | 02-03-2016 |
| | | | DE | 102015112925 A1 | 11-02-2016 |
| | | | JP | 6552323 B2 | 31-07-2019 |
| | | | JP | 2016038590 A | 22-03-2016 |
| | | | KR | 20160018373 A | 17-02-2016 |
| | | | RU | 2015132864 A | 09-02-2017 |
| | | | US | 2016041484 A1 | 11-02-2016 |
| EP 3674800 | A1 | 01-07-2020 | CN | 111381467 A | 07-07-2020 |
| | | | EP | 3674800 A1 | 01-07-2020 |
| | | | JP | 2020109499 A | 16-07-2020 |
| | | | US | 2020209768 A1 | 02-07-2020 |
| US 2018067415 | A1 | 08-03-2018 | JP | 6365764 B2 | 01-08-2018 |
| | | | JP | WO2016148012 A1 | 21-12-2017 |
| | | | US | 2018067415 A1 | 08-03-2018 |
| | | | WO | 2016148012 A1 | 22-09-2016 |
| EP 3674803 | A1 | 01-07-2020 | CN | 111381465 A | 07-07-2020 |
| | | | EP | 3674803 A1 | 01-07-2020 |
| | | | EP | 4086706 A1 | 09-11-2022 |
| | | | JP | 7207998 B2 | 18-01-2023 |
| | | | JP | 2020106723 A | 09-07-2020 |
| | | | US | 2020209766 A1 | 02-07-2020 |
| JP 2017151255 | A | 31-08-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002284881 A
- JP 2019099809 A
- JP 2019143128 A
- JP 2007233030 A

**Non-patent literature cited in the description**

- **T.G. FOX.** *Phys.Rev.,* 1952, vol. 86, 652